(19) Europäisches Patentamt
European Patent Office
Office européen des brevets

(11) EP 4 435 025 A1

(12) **EUROPEAN PATENT APPLICATION**
published in accordance with Art. 153(4) EPC

(43) Date of publication:
**25.09.2024 Bulletin 2024/39**

(21) Application number: **22895372.5**

(22) Date of filing: **26.10.2022**

(51) International Patent Classification (IPC):
***C08F 290/04*** $^{(2006.01)}$ ***C08F 2/44*** $^{(2006.01)}$
***C08F 20/00*** $^{(2006.01)}$ ***C08F 20/10*** $^{(2006.01)}$
***C08K 3/36*** $^{(2006.01)}$ ***C09K 3/10*** $^{(2006.01)}$
***H01M 8/0284*** $^{(2016.01)}$ ***H01M 8/10*** $^{(2016.01)}$

(52) Cooperative Patent Classification (CPC):
**C08F 2/44; C08F 20/00; C08F 20/10; C08F 290/04; C08K 3/36; C09K 3/10; H01M 8/0284; H01M 8/10;**
Y02E 60/50

(86) International application number:
**PCT/JP2022/039838**

(87) International publication number:
**WO 2023/090088 (25.05.2023 Gazette 2023/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.11.2021 JP 2021187514**

(71) Applicant: **ThreeBond Co., Ltd.**
**Tokyo 192-0398 (JP)**

(72) Inventor: **SUZUKI, Nao**
**Hachioji-shi, Tokyo 192-0398 (JP)**

(74) Representative: **Crow, Martin et al**
**Venner Shipley LLP**
**200 Aldersgate**
**London EC1A 4HD (GB)**

(54) **PHOTOCURABLE RESIN COMPOSITION, FUEL CELL, AND SEALING METHOD**

(57) An object of the present invention is to provide a photocurable resin composition that can form a cured product with low compression set and excellent sealing properties at low compression. The photocurable resin composition of the present invention contains: components (A) to (C) below, wherein the mass ratio (b2/b1) of a component (b1) below and a component (b2) below is from 1.0 to 5.0; and the component (b2) is contained in an amount of 10 to 65 parts by mass relative to 100 parts by mass of the component (A),
component (A): a polyisobutylene resin containing one or more (meth)acryloyl groups and a $-[CH_2C(CH_3)_2]-$ unit,
component (B): (b1) an acrylate monomer having an alicyclic hydrocarbon group having 5 to 25 carbon atoms and (b2) an acrylate monomer having a linear or branched alkyl group having 5 to 30 carbon atoms,
component (C): a photoradical polymerization initiator.

Figure 1

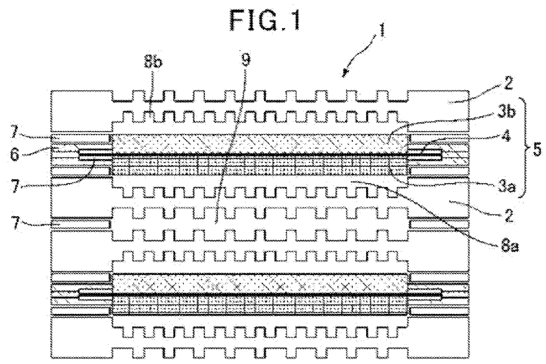


EP 4 435 025 A1

## Description

### TECHNICAL FIELD

The present invention relates to a photocurable resin composition, a fuel cell, and a sealing method.

### BACKGROUND ART

In recent years, fuel cells have attracted attention as a new energy system for automobiles and homes. A fuel cell is a power generation device that generates electricity by chemically reacting hydrogen and oxygen. In addition, fuel cells are a clean next-generation power generation device because of having high energy efficiency during power generation and producing water through the reaction of hydrogen and oxygen. There are four types of fuel cells: polymer electrolyte fuel cells, phosphoric acid fuel cells, molten carbonate fuel cells, and solid oxide fuel cells. Among these, polymer electrolyte fuel cells have high power generation efficiency while an operating temperature is relatively low (around 80°C), and thus are expected to be used as power sources for automobiles, home power generators, small power supplies for electronic devices such as mobile phones, and emergency power supplies.

As shown in Fig. 1, a cell 1 of a polymer electrolyte fuel cell has a structure including: a membrane electrode assembly (MEA) 5 having a polymer electrolyte membrane 4 sandwiched between an air electrode (cathode) 3a and a fuel electrode (anode) 3b; a frame 6 that supports the MEA; and a separator 2 with a gas flow path.

To start a polymer electrolyte fuel cell, it is necessary to separately supply a fuel gas containing hydrogen to the fuel electrode (anode) 3b and an oxidizing gas containing oxygen to the air electrode (cathode) 3a. This is because if one of the gases mixes with the other gas due to insufficient separation, power generation efficiency may decrease. For this reason, sealing agents has been often used for the purpose of preventing leakage of fuel gas, oxidizing gas, and the like. Specifically, a seal portion 7 formed with a sealing agent is disposed between adjacent separators 2, between the separator 2 and a frame 6, between the frame 6 and the polymer electrolyte membrane 4 or a MEA 5, and the like.

The investigated sealing agent used in polymer electrolyte fuel cells includes: a thermosetting resin composition that undergoes a hydrosilylation reaction using a polyisobutylene-based polymer (refer to Japanese Patent Laid-Open No. 2004-111146); a thermosetting resin composition that undergoes a hydrosilylation reaction using a fluoropolyether compound (refer to Japanese Patent Laid-Open No. 2004-075824 (US Patent Application Publication No. 2005/0043480)); a thermosetting resin composition that undergoes a hydrosilylation reaction using a fluoropolymer (refer to Japanese Patent Laid-Open No. 2007-100099 A (US Patent Application Publication No. 2006/0052546)); and a thermosetting resin composition using ethylene-propylene-diene rubber (refer to Japanese Patent Laid-Open No. 2013-229323 (US Patent Application Publication No. 2014/0287340)), because of a rubber elastic material with excellent gas permeability, low moisture permeability, excellent heat resistance, excellent acid resistance, and excellent flexibility. However, the thermosetting resin composition disclosed in Japanese Patent Laid-Open No. 2004-111146, Japanese Patent Laid-Open No. 2004-075824 (US Patent Application Publication No. 2005/0043480), Japanese Patent Laid-Open No. 2007-100099 (U.S. Patent Application Publication No. 2006/0052546), and Japanese Patent Laid-Open No. 2013-229323 (U.S. Patent Application Publication No. 2014/0287340) requires a heating process for curing, thus causing a problem of time-consuming work process. Thus, photocurable resin compositions that can shorten the tact time of the curing process are attracting attention. Japanese Patent Laid-Open No. H02-88614 (European Patent Application Publication No. 000353471) has disclosed a polymer composition containing a telechelic polyisobutylene polymer having two or three terminal acrylate groups and a reactive diluent.

### SUMMARY OF INVENTION

The cured product of the photocurable resin composition disclosed in the above-described Japanese Patent Laid-Open No. H02-88614 (European Patent Application Publication No. 000353471) has a large compression set, thus causing a problem of poor durability when used for a gasket. In addition, the cured product of the photocurable resin composition disclosed in Japanese Patent Laid-Open No. H02-88614 (European Patent Application Publication No. 000353471) failed to exhibit sufficient sealing properties when used as a gasket at low compression.

The present invention has been made in view of the above circumstances, and provides a photocurable resin composition that provides a cured product with low compression set and excellent sealing properties at low compression.

The content of the present invention will be explained below.

1. A photocurable resin composition containing:

components (A) to (C) below, wherein a mass ratio (b2/b1) of a component (b1) below and a component (b2) below is from 1.0 to 5.0 of, and the component (b2) is contained in an amount in a range of 10 to 65 parts by mass relative to 100 parts by mass of the following component (A),

component (A): a polyisobutylene resin containing one or more (meth)acryloyl groups and a $-[CH_2C(CH_3)_2]-$ unit,

component (B): (b1) an acrylate monomer having an alicyclic hydrocarbon group having 5 to 25 carbon atoms and (b2) an acrylate monomer having a linear or branched alkyl group having 5 to 30 carbon atoms, and

component (C): a photoradical polymerization initiator.

2. The photocurable resin composition according to 1 described above, containing 15 to 130 parts by mass of the component (B) relative to 100 parts by mass of the component (A) .

3. The photocurable resin composition according to 1 or 2 described above, wherein

the component (b1) includes at least one selected from the group consisting of cyclohexyl acrylate, trimethylcyclohexyl acrylate, 4-t-butylcyclohexyl acrylate, dicyclopentanyl acrylate, dicyclopentenyl acrylate, dicyclopentenyloxyethyl acrylate, isobornyl acrylate, and adamantyl acrylate, and
the component (b2) includes at least one selected from the group consisting of isononyl acrylate, isostearyl acrylate, tridecyl acrylate, lauryl acrylate, tetradecyl acrylate, tetraoctyl acrylate, pentadecyl acrylate, hexadecyl acrylate, heptadecyl acrylate, and n-octyl acrylate.

4. The photocurable resin composition according to any one of 1 to 3 described above, further comprising hydrophobic silica as a component (D).

5. The photocurable resin composition according to any one of 1 to 4 described above, wherein a cured product of the photocurable resin composition has a compression set of 20% or less after 100 hours in a 50% compressed state.

6. A sealing agent comprising the photocurable resin composition according to any one of 1 to 5 described above.

7. A cured product obtained by irradiating the photocurable resin composition according to any one of 1 to 5 or the sealing agent according to 6 described above with light.

8. A fuel cell containing a seal portion between adjacent separators in a fuel cell, and a seal portion between a frame and an electrolyte membrane in a fuel cell, or a seal portion between a frame and a membrane electrode assembly in a fuel cell, wherein any of the seal portion includes the cured product according to 7 described above.

9. A method for sealing at least a portion between at least two flanges of a part to be sealed having at least two flanges, the method including:
a step of applying the photocurable resin composition according to any one of 1 to 5 described above or the sealing agent according to 6 described above to at least one of the flanges; a step of irradiating the applied photocurable resin composition or sealing agent with active energy rays to cure the photocurable resin composition or the sealing agent and to form a gasket made of a cured product of the photocurable resin composition or the sealing agent; and a step of disposing another flange on the gasket and press-bonding the one flange applied with the photocurable resin composition or the sealing agent and the another flange together via the gasket to seal at least a portion between the at least two flanges.

10. A method for sealing at least a portion between at least two flanges of a part to be sealed having at least two flanges, the method including: a step of disposing a mold for forming a gasket on at least one of the flanges; a step of injecting the photocurable resin composition according to any one of 1 to 5 described above or the sealing agent according to 6 described above in at least a part of a gap between the mold for forming the gasket and the flange with the mold disposed; a step of irradiating the photocurable resin composition or sealing agent with active energy rays to cure the photocurable resin composition or the sealing agent, and to form a gasket made of a cured product of the photocurable resin composition or the sealing agent; a step of removing the mold from the one flange; and a step of disposing another flange on the gasket and press-bonding the one flange and the another flange via the gasket to seal at least a portion between the at least two flanges.

## BRIEF DESCRIPTION OF DRAWINGS

Fig. 1 is a schematic cross-sectional view of a single cell of a fuel cell. In Fig. 1, 1 indicates a cell of a polymer electrolyte fuel cell, 2 indicates a separator, 3a indicates an air electrode (cathode), 3b indicates a fuel electrode (anode), 4 indicates a polymer electrolyte membrane, 5 indicates a membrane electrode assembly (MEA), 6 indicates a frame, 7 indicates a seal portion, 8a indicates an oxidizing gas flow path, 8b indicates a fuel gas flow path, and 9 indicates a cooling water flow path.

Fig. 2 is a schematic diagram showing an entire fuel cell. In Fig. 2, 10 indicates a cell stack, and 11 indicates a polymer electrolyte fuel cell.

## DESCRIPTION OF EMBODIMENTS

The first aspect of the present invention relates to a photocurable resin composition containing components (A) to (C), wherein
the mass ratio (b2/b1) of a component (b1) below and a component (b2) below is from 1.0 to 5.0, and the component (b2) is contained in an amount of 10 to 65 parts by mass relative to 100 parts by mass of the component (A).
Component (A): a polyisobutylene resin containing one or more (meth)acryloyl groups and a $-[CH_2C(CH_3)_2]-$ unit,

Component (B): (b1) an acrylate monomer having an alicyclic hydrocarbon group having 5 to 25 carbon atoms and (b2) an acrylate monomer having a linear or branched alkyl group having 5 to 30 carbon atoms, and

Component (C): a photoradical polymerization initiator

According to the photocurable resin composition according to the present invention, there is provided a photocurable resin composition that can form a cured product with little compression set and excellent sealing properties at low compression. In the present description, "low compression" means a state of, for example, 20% compression, that is, when the thickness (height) of a cured product formed from a photocurable resin composition is regarded as 100%, 20% of the thickness is compressed.
The details of the invention will be explained below. The present invention is not limited to the following embodiments, and can be variously modified within the scope of the claims. In addition, the embodiments described in the present description can be combined optionally to form other embodiments. The embodiments described in the present description is combined optionally to allow to form other embodiments.
Throughout the present description, references to the singular should be understood to encompass the plural unless otherwise specified. Therefore, singular articles (for example, "a", "an", "the", and the like in the case of English language) should be understood to encompass the plural concept, unless otherwise specified. In addition, the terms used in the present description should be understood to have the meanings commonly used in the art, unless otherwise specified. Therefore, unless defined otherwise, all technical and scientific terms used in the present description have the same meaning as commonly understood by a person skilled in the art to which the present invention belongs. In case of conflict, the present description, including definitions, takes priority. In addition, the dimensional ratios in the drawings are exaggerated for convenience of explanation and may differ from the actual ratios. In the present description, "X to Y" is used to include the numerical values (X and Y) written before and after it as lower and upper limits, and means "X or more and Y or less ". In addition, in the present invention, (meth)acrylate encompasses both acrylate and methacrylate.

<Component (A)>

The component (A) used in the present invention is not particularly limited as long as it is a polyisobutylene resin (polymer having a polyisobutylene skeleton) having one or more (meth)acryloyl groups and containing a $-[CH_2C(CH_3)_2]-$unit. The component (A) may have a (meth)acryloyl group ($CH_2=CH-C(=O)-$ or $CH_2=C(CH_3)-C(=O)-$) and a $-[CH_2C(CH_3)_2]-$ unit (in the present description, may be referred to as "polyisobutylene unit"), and may be a polymer further containing a "structural unit other than the $-[CH_2C(CH_3)_2]-$unit", for example. The component (A) may suitably contain a $-[CH_2C(CH_3)_2]-$ unit in a content, for example, of 70% by mass or more, preferably of 75% by mass or more, more preferably of 80% by mass or more, and particularly preferably of 90% by mass or more, relative to the total amount

of structural units (component (A)). In addition, the component (A) may suitably contain a -[$CH_2C(CH_3)_2$]- unit in a content, for example, of less than 100% by mass, of 95% by mass or less in another aspect, and of 90% by mass or less in another aspect, relative to the total amount of structural units (component (A)). The component (A) preferably has 1 to 12 (meth)acryloyl groups, more preferably 2 to 8 (meth)acryloyl groups, still more preferably 2 to 4 (meth)acryloyl groups, and particularly preferably 2 (meth)acryloyl groups in one molecule. In addition, in the present invention, the polymer, but not limited to the following theory, can be defined as, for example, a compound having a structure having monomer repeating unit(s) as a main chain of the polymer and consisting of 50 or more, preferably 100 or more repeating units. The number of a -[$CH_2C(CH_3)_2$]- unit in one polyisobutylene skeleton (PIB in the following formula (1)) is, for example, 50 or more, preferably 60 to 300, more preferably 80 to 200. In addition, the (meth)acryloyl group may be present in either a side chain and/or a terminal of a molecule, but preferably is present at the terminal of the molecule from the viewpoint of obtaining a photocurable resin composition that provides a cured product with low compression set and excellent sealing properties at low compression.

As the component (A), a polyisobutylene resin represented by the following formula (1) is preferable from the viewpoint of obtaining a photocurable resin composition that can form a cured product with low compression set. That is, in a preferred embodiment of the present invention, the component (A) is a polyisobutylene resin represented by the following formula (1).

A specific example of the component (A) includes polyisobutylene resin having a (meth)acryloyloxyalkoxyphenyl group. The main skeleton of the component (A) in the present invention is a polyisobutylene skeleton, and in addition to mainly using isobutylene as the monomer constituting the polyisobutylene skeleton, other monomers may be used for copolymerization as long as they do not impair the effect(s) by the present invention. The component (A) is preferably liquid at room temperature (25°C) because a photocurable resin composition with good discharge properties from a dispenser can be obtained. Herein, "liquid" specifically means that the viscosity measured with a cone-plate viscometer at 25°C is 3000 Pa·s or less.

Formula (1):

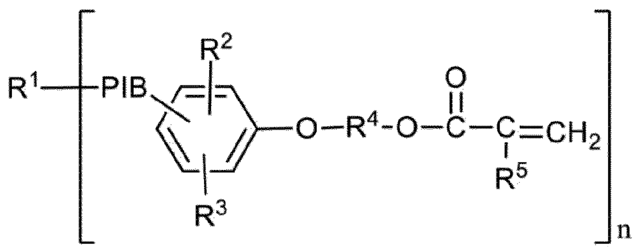

In the above formula (1), $R^1$ represents a monovalent or polyvalent aromatic hydrocarbon group or a monovalent or polyvalent aliphatic hydrocarbon group. In this case, the polyvalent aromatic hydrocarbon group and the polyvalent aliphatic hydrocarbon group refer to a divalent to hexavalent aromatic hydrocarbon group and an aliphatic hydrocarbon group, respectively. The valence of $R^1$ is not particularly limited, but is preferably 2 to 4, more preferably 2 from the viewpoint of obtaining a cured product with excellent compression set.

The aromatic hydrocarbon group as $R^1$ is not particularly limited, but examples thereof include groups derived from benzene, pentalene, indene, naphthalene, anthracene, azulene, hepthalene, acenaphthalene, phenalene, fluorene, anthraquinone, phenanthrene, biphenyl, terphenyl, quarterphenyl, quinquephenyl, sexiphenyl, triphenylene, pyrene, chrysene, picene, perylene, pentaphene, pentacene, tetraphene, hexaphene, hexacene, rubisene, trinaphthylene, heptafene, and pyrantrene. Among these, groups derived from benzene, naphthalene, anthracene, and biphenyl are preferable, and a group derived from benzene is more preferable, from the viewpoint of obtaining a cured product with excellent compression set.

In addition, the monovalent aliphatic hydrocarbon group as $R^1$ is not particularly limited, but examples thereof include: a straight or branched alkyl group having 1 to 12 carbon atoms (for example, methyl group, ethyl group, n-propyl group, isopropyl group, n-butyl group, isobutyl group, sec-butyl group, tert-butyl group, n-pentyl group, isopentyl group, sec-pentyl group, tert-pentyl group, n-hexyl group, isohexyl group, sec-hexyl group, tert-hexyl group, n-heptyl group, n-octyl group, 2-ethylhexyl group, n-nonyl group, n-decyl group, n-undecyl group, n-dodecyl group); a straight or branched alkenyl group having 2 to 12 carbon atoms; and a straight or branched alkynyl group having 2 to 12 carbon atoms. In addition, the divalent aliphatic hydrocarbon group as $R^1$ is not particularly limited, but examples thereof include: a straight or branched alkylene group having 1 to 12 carbon atoms (for example, methylene group, ethylene group, trimethylene group, tetramethylene group, propylene group (-$CH(CH_3)CH_2$-), isopropylene group (-$C(CH_3)_2$-)); a straight or branched alkenylene group having 2 to 12 carbon atoms; and a straight or branched alkynylene group having 2 to 12 carbon atoms.

$R^1$ is preferably a polyvalent aromatic hydrocarbon group, more preferably, a divalent to tetravalent group

derived from benzene, particularly more preferably a divalent phenylene group (o, m, p-phenylene group), and particularly preferably p-phenylene group.

In the above formula (1), PIB represents a polyisobutylene skeleton containing a $-[CH_2C(CH_3)_2]-$ unit (or consisting of $-[CH_2C(CH_3)_2]-$ unit). In the former case (that is, PIB contains an additional unit as well as a - $[CH_2C(CH_3)_2]-$ unit), the additional unit is not particularly limited, and examples thereof include a straight or branched alkylene group having 1 to 6 carbon atoms such as a methylene group, ethylene group, trimethylene group, tetramethylene group, propylene group ($-CH(CH_3)CH_2-$), and isopropylene group ($-C(CH_3)_2-$). Among these, PIB is preferably formed of a - $[CH_2C(CH_3)_2]-$ unit or a linear or branched alkylene group having 2 to 6 carbon atoms and a $-[CH_2C(CH_3)_2]-$ unit, more preferably formed of a branched alkylene group having 3 to 5 carbon atoms and a $-[CH_2C(CH_3)_2]-$ unit, and particularly preferably formed of an isopropylene group ($-C(CH_3)_2-$) and a - $[CH_2C(CH_3)_2]-$ unit [that is, $-C(CH_3)_2-[CH_2C(CH_3)_2]-$ unit or - $C(CH_3)_2-[C(CH_3)_2CH_2]-$ unit].

In the above formula (1), $R^4$ represents a divalent hydrocarbon group having 2 to 6 carbon atoms. The divalent hydrocarbon group may have any substituent such as a halogen atom, an amino group, a cyano group, a nitro group, and a hydroxy group. Herein, the divalent hydrocarbon group having 2 to 6 carbon atoms is not particularly limited, but the same groups as those exemplified as specific examples of PIB can be exemplified. Preferably, $R^4$ is a divalent hydrocarbon group having 2 or 3 carbon atoms. The divalent hydrocarbon group is preferably an alkylene group, an alkenylene group, an alkynylene group, or the like. Among these, $R^4$ is preferably a divalent alkylene group having 2 or 3 carbon atoms (ethylene group ($-CH_2-CH_2-$), trimethylene group ($-CH_2-CH_2-CH_2-$), propylene group ($-CH(CH_3)CH_2-$), isopropylene group ($-C(CH_3)_2-$)), and particularly preferably an ethylene group.

In the above formula (1), $R^2$ and $R^3$ each independently represent a hydrogen atom or a monovalent hydrocarbon group having 1 to 20 carbon atoms. Herein, $R^2$ and $R^3$ may be the same or different. Examples of the monovalent hydrocarbon group include a monovalent alkyl group having 1 to 20 carbon atoms, a monovalent alkenyl group having 2 to 20 carbon atoms, and a monovalent alkynyl group having 2 to 20 carbon atoms. These monovalent hydrocarbon groups may have any substituent such as a halogen atom, an amino group, a cyano group, a nitro group, and a hydroxy group.

Examples of the monovalent alkyl group having 1 to 20 carbon atoms include linear or branched alkyl groups such as a methyl group, ethyl group, n-propyl group, isopropyl group, n-butyl group, isobutyl group, sec-butyl group, tert-butyl group, n-pentyl group, isopentyl, neopentyl, n-hexyl group, cyclohexyl group, n-heptyl group, n-octyl group, 2-ethylhexyl group, n-nonyl group, n-decyl group, n-undecyl group, n-dodecyl group, n-tridecyl group, n-tetradecyl group, 2-tetraoctyl group, n-pentadecyl group, n-hexadecyl group, 2-hexyldecyl group, n-heptadecyl group, 1-octylnonyl group, n-octadecyl group, n-nonadecyl group, and n-icosyl group. Examples of the monovalent alkenyl group having 2 to 20 carbon atoms include linear or branched alkenyl groups such as a vinyl group, allyl group, 1-propenyl group, isopropenyl group, 1-butenyl group, 2-butenyl group, 3-butenyl group, 1-pentenyl group, 2-pentenyl group, 3-pentenyl group, 1-hexenyl group, 2-hexenyl group, 3-hexenyl group, 1-heptenyl group, 2-heptenyl group, 5-heptenyl group, 1-octenyl group, 3-octenyl group, and 5-octenyl group. Examples of the monovalent alkynyl group having 2 to 20 carbon atoms include linear or branched alkynyl groups such as an acetylenyl group, 1-propynyl group, 2-propynyl group, 1-butynyl group, 2-butynyl group, 3-butynyl group, 1-pentethyl group, 2-pentethyl group, 3-pentethyl group, 1-hexynyl group, 2-hexynyl group, 3-hexynyl group, 1-heptynyl group, 2-heptynyl group, 5-heptynyl group, 1-octynyl group, 3-octynyl group, and 5-octynyl group.

Among these, $R^2$ and $R^3$ are preferably a hydrogen atom or a linear or branched alkyl group having 1 to 8 carbon atoms, more preferably a hydrogen atom or a linear or branched alkyl group having 1 to 3 carbon atoms, particularly preferably a hydrogen atom.

In the above formula (1), $R^5$ represents a hydrogen atom or a methyl group, preferably a hydrogen atom. n is an integer of 1 to 6, more preferably an integer of 2 to 4, particularly preferably 2. When n is 2 or more, PIB, $R^2$, $R^3$, $R^4$, and $R^5$ may be the same or different.

A molecular weight of the component (A) in the present invention is not particularly limited, but from the viewpoint of obtaining a photocurable resin composition that has even less compression set and forms a cured product with excellent sealing properties at low compression, a number average molecular weight measured by chromatography is preferably 200 to 500,000, more preferably 500 to 300,000, still more preferably 1,000 to 100,000, and particularly preferably 3,000 to 50,000. The number average molecular weight is calculated by a standard polystyrene conversion method with size permeation chromatography (SEC). When two or more types of the components (A) are used together, it is preferable that the number average molecular weight of at least one of the components (A) is within the above range.

A viscosity of the component (A) in the present invention at 25°C is not particularly limited, but for example, 5 Pa·s or more, preferably 50 Pa·s or more, more preferably 100 Pa·s or more, for example, 3000 Pa·s or less, preferably 2500 Pa·s or less, more preferably 2000 Pa·s or less because a photocurable resin composition with good discharge properties from a dispenser can be obtained. A particularly preferable viscosity is 1750 Pa·s or less. Unless otherwise specified, the viscosity was measured using a cone-plate viscometer at 25°C. When two or more types of the components (A) are used together, it is preferable that the viscosity of at least one of the components (A) is within the above range.

A method for producing the component (A) is not particularly limited, but known methods can be used. Examples thereof include a method of reacting polyisobutylene with terminal hydroxyl groups and acryloyl chloride or methacryloyl chloride as disclosed in, for example, Polymer Bulletin, Vol. 6, pp. 135-141 (1981), T. P. Liao and J. P. Kennedy and Polymer Bulletin, Vol. 20, pp. 253-260 (1988), Puskas et al. Examples of other methods for producing component (A) include: a method of reacting polyisobutylene with terminal hydroxyl groups and a compound having a (meth)acryloyl group and an isocyanate group; a method of reacting polyisobutylene with terminal hydroxyl groups, a compound having an isocyanate group, and a compound having a (meth)acryloyl group and a hydroxyl group; and a method of reacting polyisobutylene with terminal hydroxyl groups and (meth)acrylic acid or (meth)acrylic acid lower ester with a dehydration esterification method or a transesterification method.

In addition, the method for producing the polyisobutylene resin represented by the formula (1) is not particularly limited, but examples thereof include preferably, a method of reacting a halogen-terminated polyisobutylene with a compound having a (meth)acryloyl group and a phenoxy group as represented by the following formula (2) disclosed in Japanese Patent Laid-Open No. 2013-216782. In addition, the halogen-terminated polyisobutylene can be obtained by a known method, for example, by cationic polymerization, and more preferably by living cationic polymerization.

Formula (2):

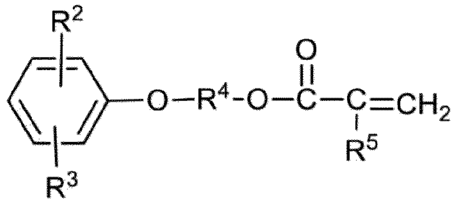

In the formula (2), $R^2$, $R^3$, $R^4$, and $R^5$ may be as defined in the above formula (1). Specifically, $R^4$ represents a divalent hydrocarbon group having 2 to 6 carbon atoms. $R^2$ and $R^3$ each independently represent a hydrogen atom or a monovalent hydrocarbon group having 1 to 20 carbon atoms. $R^5$ represents a hydrogen atom or a methyl group. Examples of the compound represented by the above formula (2) include phenoxymethyl (meth)acrylate, phenoxyethyl (meth)acrylate, phenoxypropyl (meth)acrylate, phenoxybutyl (meth)acrylate, phenoxypentyl (meth)acrylate, preferably phenoxyethyl (meth)acrylate, phenoxypropyl (meth)acrylate, phenoxybutyl (meth)acrylate, phenoxypentyl (meth)acrylate.

<Component (B)>

The component (B) of the present invention is a component (b1): acrylate monomer having an alicyclic hydrocarbon group having 5 to 25 carbon atoms, and a component (b2): acrylate monomer having a linear or branched alkyl group having 5 to 30 carbon atoms. The component (b1) and component (b2) are an ester compound having at least one acryloyloxy group ($H_2C=CH-C(=O)-O-$), that is, an acrylic ester. The component (b1) includes an alicyclic hydrocarbon group having 5 to 25 carbon atoms and an acryloyloxy group, and the component (b2) includes a linear or branched alkyl group having 5 to 30 carbon atoms, and an acryloyloxy group. In the present description, the component (b1) and the component (b2) may also be collectively referred to as "component (B)".

The component (b1) may further have a divalent to tetravalent organic group between the alicyclic hydrocarbon group having 5 to 25 carbon atoms and the acryloyloxy group. Similarly, the component (b2) may further have a divalent to tetravalent organic group between the linear or branched alkyl group having 5 to 30 carbon atoms and the acryloyloxy group. Herein, the organic group means a group containing a carbon atom. When the component (b1) and/or component (b2) has the above-described organic group, the valence thereof is preferably divalent. Examples of the divalent organic group include an oxyalkylene group having 2 to 4 carbon atoms, and specific examples thereof include an oxyethylene group ($-OCH_2CH_2-$), oxypropylene group ($-OCH(CH_3)CH_2-$), oxytrimethylene group ($-OCH_2CH_2CH_2-$), and oxybutylene group ($-OCH_2CH_2CH_2CH_2-$). Among these the oxyalkylene group, oxyethylene group, and oxypropylene group are preferable, and the oxyethylene group is more preferable. In this case, it is preferable that the oxyalkylene group is included in the form in which the oxygen atom of the oxyalkylene group is bonded to an alicyclic hydrocarbon group having 5 to 25 carbon atoms or a linear or branched alkyl group having 5 to 30 carbon atoms.

The photocurable resin composition according to the present invention contains the components (b1) and (b2) in a combination of a predetermined ratio, and contains 10 to 65 parts by mass of the component (b2) relative to 100 parts by mass of the component (A), thereby allowing to provide a photocurable resin composition that forms a cured product with low compression set and excellent sealing properties at low compression. In addition, combining the components (b1) and (b2) at a predetermined ratio provides a cured product with high elongation (high elongation rate),

exhibiting the effect of excellent cured product properties.

For the component (B), the number of acryloyl groups (acryloyloxy groups) contained in one molecule may be one (monofunctional) or more, the upper limit is not particularly limited, but is, for example, 3 (trifunctional) or less, preferably 2 (bifunctional) or less. The acrylate monomer as the component (B) is preferably monofunctional (monofunctional acrylate monomer) from the viewpoint of obtaining a cured product with higher elongation. More preferably, the component (B) is a compound represented by the formula: $H_2C=CR^7-C(=O)-O-R^6$. Herein, $R^6$ represents an alicyclic hydrocarbon group having 5 to 25 carbon atoms or a linear or branched alkyl group having 5 to 30 carbon atoms. In the above formula, those in which $R^6$ is an alicyclic hydrocarbon group having 5 to 25 carbon atoms correspond to the component (b1), and those in which $R^6$ is a linear or branched alkyl group having 5 to 30 carbon atoms correspond to the component (b2). In addition, in the above formula, $R^7$ represents a hydrogen atom. If a compound has both an alicyclic hydrocarbon group having 5 to 25 carbon atoms and a linear or branched alkyl group having 5 to 30 carbon atoms in addition to the acryloyloxy group, it is determined whether the compound belongs to the component (b1) or component (b2) depending on the substituent directly bonded to the acryloyloxy group. For example, a compound in which a cyclohexyl group substituted with a lauryl group (a linear alkyl group having 12 carbon atoms) is bonded to an acryloyloxy group corresponds to the component (b1). In addition, if a divalent organic group exists between the acryloyloxy group and the alicyclic hydrocarbon group or the alkyl group, it is determined whether the compound belongs to the component (b1) or component (b2) depending on the substituent bonded to the divalent organic group. For example, a compound in which a cyclohexyl group substituted with a lauryl group is bonded to an acryloyloxy group via an oxyethylene group corresponds to the component (b1).

For the component (B), if the substituent is further substituted with another substituent, the number of carbon atoms of each substituent includes the number of carbon atoms constituting the other substituent. Specifically, for the component (b1), if the alicyclic hydrocarbon group is substituted with the other substituent (for example, a chain hydrocarbon group such as an alkyl group), the number of carbon atoms of the alicyclic hydrocarbon group means the number of carbon atoms including the number of carbon atoms of the other substituent described above (that is, the sum of the number of carbon atoms of the alicyclic hydrocarbon group and the number of carbon atoms of other substituents). Similarly, for the component (b2), if a linear or branched alkyl group is substituted with the other substituent (for example, an alicyclic hydrocarbon group), the number of carbon atoms of a linear or branched alkyl group means the number of carbon atoms including the number of carbon atoms of the other substituent described above (that is, the sum of the number of carbon atoms of the linear or branched alkyl group and the number of carbon atoms of the other substituent).

Examples of the alicyclic hydrocarbon group having 5 to 25 carbon atoms (preferably the alicyclic hydrocarbon group as $R^6$) contained in the component (b1) include: monocyclic cycloalkyl groups such as a cyclopentyl group, cyclohexyl group, methylcyclohexyl group, dimethylcyclohexyl group, trimethylcyclohexyl group, and 4-t-butylcyclohexyl group; monocyclic cycloalkenyl groups such as a cyclopentenyl group and cyclohexenyl group; polycyclic cycloalkyl groups such as a dicyclopentanyl group, norbornyl group, methylnorbornyl group, bornyl group, isobornyl group, and adamantyl group (for example, 1-adamantyl group, 2-adamantyl group); and polycyclic cycloalkenyl groups such as a dicyclopentenyl group. In addition, the component (b1) may contain a combination of these groups.

Among these, the alicyclic hydrocarbon group contained in the component (b1) is preferably a monocyclic or polycyclic cycloalkyl group having 5 to 20 carbon atoms or a polycyclic cycloalkenyl group having 5 to 20 carbon atoms, more preferably a monocyclic or polycyclic cycloalkyl group having 5 to 20 carbon atoms, more preferably a monocyclic or polycyclic cycloalkyl group having 6 to 15 carbon atoms, particularly preferably a monocyclic or polycyclic cycloalkyl group having 8 to 12 carbon atoms, and most preferably a monocyclic cycloalkyl group having 8 to 12 carbon atoms.

In addition, the component (b1) is not particularly limited, but examples thereof includes cyclohexyl acrylate, trimethylcyclohexyl acrylate, 4-t-butylcyclohexyl acrylate, dicyclopentanyl acrylate, dicyclopentenyl acrylate, dicyclopentenyloxyethyl acrylate, isobornyl acrylate, and adamantyl acrylate, and among these, 4-t-butylcyclohexyl acrylate, dicyclopentanyl acrylate, dicyclopentenyl acrylate, and isobornyl acrylate are preferable, and 4-t-butylcyclohexyl acrylate or isobornyl acrylate is more preferable. Particularly, from the viewpoint of obtaining a cured product with high elongation and high strength, the component (b1) preferably contains 4-t-butylcyclohexyl acrylate. The component (b1) can be used alone or as a mixture of two or more.

In addition, as the component (b1), either a commercially available product or a synthetic product may be used. The commercially available product of the component (b1) is not particularly limited, but examples thereof include SR-506 (isobornyl acrylate, manufactured by Sartomer Co., Ltd.), SR-217 (4-t-butylcyclohexyl acrylate, manufactured by Sartomer Co., Ltd.), FA-513AS (dicyclopentanyl acrylate, manufactured by Showa Denko Materials Co., Ltd.), TBCHA (4-t-butylcyclohexyl acrylate, manufactured by KJ Chemicals Corporation), and IB-XA (isobornyl acrylate, manufactured by Kyoeisha Chemical Co., Ltd.)

Examples of the linear or branched alkyl group having 5 to 30 carbon atoms (preferably the alkyl group as $R^6$) contained in the component (b2) include linear alkyl groups such as a n-pentyl group, n-hexyl group, n-heptyl group, n-octyl group, n-nonyl group, n-decyl group, n-undecyl group, lauryl group (n-dodecyl group), n-tridecyl group, myristyl group (n-tetradecyl group), n-pentadecyl group, n-hexadecyl group, n-heptadecyl group, stearyl group (n-octadecyl

group), n-nonadecyl group, and n-icosyl group; and branched alkyl groups such as a 1-methylbutyl group, 2-methylbutyl group, 3-methylbutyl group, 1-ethylpropyl group, 1,1-dimethylpropyl group, 1,2-dimethylpropyl group, 2,2-dimethylpropyl group, 1-methylpentyl group, 4-methyl-2-pentyl group, 3,3-dimethylbutyl group, 2-ethylbutyl group, 1-methylhexyl group, 2-ethylhexyl group, 4-methylhexyl group, 5-methylhexyl group, 1-ethylpentyl group, 1-propylbutyl group, 1-ethyl-1,2-dimethylpropyl group, 1-methylheptyl group, 1-ethylhexyl group, 1-propylpentyl group, 2-propylpentyl group, isononyl group (7-methyloctyl group), 1-methyloctyl group, 2,2-dimethylheptyl group, 1-ethylheptyl group, 3-ethylheptyl group, 1-propylhexyl group, 1-butylpentyl group, 1-methylnonyl group, 1-ethyloctyl group, 1-propylheptyl group, 1-butylhexyl group, and isostearyl group.

The number of carbon atoms in the linear or branched alkyl group contained in the component (b2) is preferably 25 or less, more preferably 22 or less, even more preferably 19 or less, particularly preferably 15 or less, and most preferably 13 or less. On the other hand, the lower limit of the number of carbon atoms is preferably 6 or more, more preferably 7 or more, particularly preferably 8 or more, and most preferably 9 or more.

In one embodiment, the alkyl group contained in the component (b2) is preferably a linear or branched alkyl group having 6 to 25 carbon atoms, more preferably a linear or branched alkyl group having 6 to 22 carbon atoms, more preferably a linear or branched alkyl group having 6 to 19 carbon atoms, still more preferably a linear or branched alkyl group having 7 to 19 carbon atoms, particularly preferably a linear or branched alkyl group having 8 to 15 carbon atoms, and most preferably a linear or branched alkyl group having 9 to 13 carbon atoms.

In addition, selecting an acrylate monomer having a branched alkyl group as the component (b2) may provide a photocurable resin composition that forms a cured product with less compression set and excellent sealing properties at low compression. Therefore, in one embodiment, the alkyl group contained in the component (b2) is preferably a branched alkyl group having 6 to 25 carbon atoms, more preferably a branched alkyl group having 6 to 22 carbon atoms, more preferably a branched alkyl group having 6 to 19 carbon atoms, still more preferably a branched alkyl group having 7 to 19 carbon atoms, particularly preferably a branched alkyl group having 8 to 15 carbon atoms, and most preferably a branched alkyl group having 9 to 13 carbon atoms.

In addition, the component (b2) is not particularly limited, and examples thereof include n-octyl acrylate, isononyl acrylate, isostearyl acrylate, stearyl acrylate, tridecyl acrylate, lauryl acrylate, tetradecyl acrylate, tetraoctyl acrylate, pentadecyl acrylate, hexadecyl acrylate, heptadecyl acrylate, and octyl nonyl acrylate, and among these, n-octyl acrylate, isononyl acrylate, isostearyl acrylate, tridecyl acrylate, lauryl acrylate, tetradecyl acrylate, tetraoctyl acrylate, pentadecyl acrylate, hexadecyl acrylate, and heptadecyl acrylate are preferable; n-octyl acrylate, isononyl acrylate, isostearyl acrylate, tridecyl acrylate, lauryl acrylate, and tetradecyl acrylate are more preferably; and n-octyl acrylate, isononyl acrylate, and lauryl acrylate are still more preferable. Particularly, from the viewpoint of obtaining a cured product with low compression set and excellent sealing properties at low compression, the component (b2) preferably contains isononyl acrylate or lauryl acrylate, and more preferably contains isononyl acrylate. The component (b2) can be used alone or as a mixture of two or more.

In addition, as the component (b2), either a commercially available product or a synthetic product may be used. Commercially available products of the component (b2) are not particularly limited, but examples thereof include ISTA (isostearyl acrylate, manufactured by OSAKA ORGANIC CHEMICAL INDUSTRY LTD.), STA (stearyl acrylate, manufactured by OSAKA ORGANIC CHEMICAL INDUSTRY LTD.), SR489D (tridecyl acrylate, manufactured by Sartomer Co., Ltd.), LA (lauryl acrylate, manufactured by BASF), L-A (lauryl acrylate, manufactured by Kyoeisha Chemical Co., Ltd.), INA (isononyl acrylate, manufactured by OSAKA ORGANIC CHEMICAL INDUSTRY LTD.), and NOAA (n-octyl acrylate, manufactured by OSAKA ORGANIC CHEMICAL INDUSTRY LTD.).

Preferable embodiments of the combination of the component (b1) and component (b2) will be described below.

In one embodiment, preferably, the component (b1) includes at least one selected from the group consisting of cyclohexyl acrylate, trimethylcyclohexyl acrylate, 4-t-butylcyclohexyl acrylate, dicyclopentanyl acrylate, dicyclopentenyl acrylate, dicyclopentenyloxyethyl acrylate, isobornyl acrylate, and adamantyl acrylate, and the component (b2) contains at least one selected from the group consisting of isononyl acrylate, isostearyl acrylate, tridecyl acrylate, lauryl acrylate, tetradecyl acrylate, tetraoctyl acrylate, pentadecyl acrylate, hexadecyl acrylate, heptadecyl acrylate, and n-octyl acrylate.

In one embodiment, preferably the component (b1) contains at least one selected from the group consisting of 4-tert-butylcyclohexyl acrylate, dicyclopentanyl acrylate, dicyclopentenyl acrylate, and isobornyl acrylate, and the component (b2) contains at least one selected from the group consisting of isononyl acrylate, isostearyl acrylate, tridecyl acrylate, lauryl acrylate, tetradecyl acrylate, and n-octyl acrylate.

In one embodiment, preferably, the component (b1) contains at least one selected from the group consisting of 4-t-butylcyclohexyl acrylate and isobornyl acrylate, and the component (b2) contains at least one member selected from the group consisting of isononyl acrylate, lauryl acrylate, and n-octyl acrylate.

In one embodiment, preferably, the component (b1) contains 4-t-butylcyclohexyl acrylate, and the component (b2) contains isononyl acrylate.

For an amount (content) of the component (b1) and the component (b2) contained in the component (B), the

mass ratio of these components, that is, the mass ratio (b2/b1) of the component (b2) to the component (b1) is from 1.0 to 5.0. The mass ratio (b2/b1) is preferably 1.0 or more and less than 5.0, more preferably from 1.2 to 4.0, still more preferably from 1.4 to 3.0, and particularly preferably from 1.5 to 2.4. Within the above range, there can be obtained a photocurable resin composition that forms a cured product with less compression set and excellent sealing properties at low compression. In addition, an amount (content) of the component (b1) contained is not particularly limited, but is, for example, 2 to 65 parts by mass, preferably 5 to 65 parts by mass, more preferably 15 to 60 parts by mass, still more preferably 20 to 55 parts by mass, particularly preferably 21 to 50 parts by mass, relative to 100 parts by mass of the component (A). In another embodiment, the amount (content) of the component (b1) contained is preferably 5 to 55 parts by mass, more preferably 10 to 45 parts by mass, particularly preferably 15 to 30 parts by mass, and most preferably more than 17 parts by mass and 25 parts by mass or less, relative to 100 parts by mass of the component (A). Within the above range, there can be obtained a photocurable resin composition that forms a cured product with even less compression set and excellent sealing properties at low compression. An amount (content) of the component (b2) contained is 10 to 65 parts by mass relative to 100 parts by mass of the component (A). Further, the amount (content) of the component (b2) contained is preferably 20 to 60 parts by mass, more preferably 30 to 55 parts by mass, particularly preferably 30 to 50 parts by mass, and most preferably 35 to 45 parts by mass, relative to 100 parts by mass of the component (A). Within the above range, there can be obtained a photocurable resin composition that forms a cured product with less compression set and excellent sealing properties at low compression. When using two or more types of the component (A), the total amount preferably satisfies the above relationship. Similarly, when using two or more types of the component (b1) or two or more types of the component (b2), the total amount thereof preferably satisfies the above relationship.

An amount (content) of the component (B) contained is not particularly limited, but is, for example, preferably 15 to 130 parts by mass, more preferably 20 to 100 parts by mass, still more preferably 30 to 80 parts by mass, particularly preferably 40 to 70 parts by mass, and most preferably 50 to 65 parts by mass, relative to 100 parts by mass of the component (A). Within the above range, there can be obtained a photocurable resin composition that forms a cured product with even less compression set and excellent sealing properties at low compression.

<Component (C)>

A photoradical polymerization initiator used as the component (C) in the present invention is not limited as long as it is a compound that generates radicals when irradiated with active energy rays. Herein, active energy rays include all light in a broad sense such as, radiation including $\alpha$-rays and $\beta$-rays, electromagnetic waves including $\gamma$-rays and X-rays, electron beam, ultraviolet rays with a wavelength of about 100 to 400 nm, and visible rays with a wavelength of about 400 to 800 nm, preferably ultraviolet rays. Examples of the component (C) include an acetophenone-based photoradical polymerization initiator, benzoin-based photoradical polymerization initiator, benzophenone-based photoradical polymerization initiator, aminobenzophenone-based photoradical polymerization initiator, thioxanthone-based photoradical polymerization initiator, acylphosphine oxide-based photoradical polymerization initiator, and titanocene-based photoradical polymerization initiator. Among these, from the viewpoint of obtaining a photocurable resin composition that can be photocured in a short time by irradiation with active energy rays, the acetophenone-based photoradical polymerization initiator and acylphosphine oxide-based photoradical polymerization initiator are preferable, and the acylphosphine oxide photoradical polymerization initiator is particularly preferable. In addition, these may be used singly or in combination of two or more.

Examples of the acetophenone-based photoradical polymerization initiator include diethoxyacetophenone, 1-phenyl-2-hydroxy-2-methylpropan-1-one, benzyl dimethyl ketal, 4-(2-hydroxyethoxy)phenyl-(2-hydroxy-2-propyl) ketone, 1-hydroxy-cyclohexyl-phenyl-ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomer, and this is not the case. Commercially available acetophenone photoradical polymerization initiators include Omnirad (registered trademark, same hereinafter) 184, Omnirad1173, Omnirad2959, Omnirad127 (manufactured by IGM Resins B.V.), and ESACURE (registered trademark) KIP-150 (manufactured by IGM Resins B.V.).

Examples of the acylphosphine oxide photoradical polymerization initiator include bis(2,4,6-trimethylbenzoyl)-phenyl-phosphine oxide, 2,4,6-trimethylbenzoyl-diphenylphosphine oxide, and ethyl phenyl(2,4,6-trimethylbenzoyl)phosphinate, but are not limited thereto. Commercially available acylphosphine oxide photoradical polymerization initiators include OmniradTPO, Omnirad819, Omnirad819DW (manufactured by IGM Resins B.V.), and DOUBLECURE (registered trademark) 1256 (manufactured by DOUBLE BOND CHEMICAL IND. Co., LTD.).

An amount of the component (C) contained is not particularly limited, but is preferably 0.1 to 20 parts by mass, more preferably 0.5 to 15 parts by mass, and particularly preferably 1.1 to 10 parts by mass, relative to 100 parts by mass of the component (A). Within the above range, there can be obtained a photocurable resin composition that forms a cured product with even less compression set and excellent sealing properties at low compression. When using two or more types of the component (A), the total amount preferably satisfies the above relationship. Similarly, when using

two or more types of the component (C), the total amount thereof preferably satisfies the above relationship.

In addition to thioxanthone (thioxanthone-based photoradical polymerization initiator), a sensitizer (photoradical polymerization initiator) such as triarylphosphine or a triarylphosphine derivative may be contained within a range that does not impair the purpose of the present invention, but it is preferable that these components are not included in order to obtain the effect(s) by the present invention more significantly. That is, the photocurable resin composition according to the present invention preferably does not substantially contain triarylphosphine, triarylphosphine derivative, and thioxanthone (thioxanthone-based photoradical polymerization initiator). In the present description, "does not substantially contain component X" means that the component X is not contained, at least intentionally. Therefore, a photocurable resin composition that inevitably contains a trace amount of component X (in the above embodiment, triarylphosphine, triarylphosphine derivative, or thioxanthone) due to raw materials, production methods, and the like may be included in the concept of a photocurable resin composition that does not substantially contain component X (in the above embodiment, triarylphosphine, triarylphosphine derivative, and thioxanthone). Specifically, a content (total amount) of triarylphosphine, the triarylphosphine derivative, and thioxanthone in the photocurable resin composition is 0.1% by mass or less, preferably 0.01% by mass or less, more preferably 0.001% by mass or less (lower limit: 0% by mass), relative to the total mass of the photocurable resin composition.

In addition, hydrogen abstraction photoradical initiators such as a benzophenone-based photoradical polymerization initiator, aminobenzophenone-based photoradical polymerization initiator, and thioxanthone-based photoradical polymerization initiator may be contained within a range that does not impair the purpose of the present invention, but in order to obtain the effect(s) by the present invention more significantly, it is preferable that a hydrogen abstraction photoradical initiator is not contained. That is, the photocurable resin composition according to the present invention preferably does not substantially contain hydrogen abstraction photoradical initiator. Specifically, a content (total amount) of the hydrogen abstraction photoradical initiator in the photocurable resin composition is 0.1% by mass or less, preferably 0.01% by mass or less, more preferably 0.001% by mass or less (lower limit: 0% by mass), relative to the total mass of the photocurable resin composition. In addition, in the above, "hydrogen abstraction photoradical initiator" refers to, for example, a compound that causes a hydrogen abstraction reaction via a triplet excited state upon irradiation with active energy rays to generate radicals.

As described above, in one preferred embodiment, the component (C) contained in the photocurable resin composition consists essentially of an acetophenone-based photoradical polymerization initiator and/or an acylphosphine oxide-based photoradical polymerization initiator. Further, in a preferred embodiment, the component (C) contained in the photocurable resin composition consists essentially of an acylphosphine oxide-based photoradical polymerization initiator. In the present description, "the component Z consists essentially of z" or "the component Z is composed essentially of z" means that a total content of z exceeds 99% by mass (upper limit: 100% by mass), assuming the total mass of the component Z as 100% by mass (relative to the component Z). That is, "component (C) consists essentially of an acetophenone-based photoradical polymerization initiator and/or an acylphosphine oxide-based photoradical polymerization initiator" means that the total content of the acetophenone-based photoradical polymerization initiator and the acylphosphine oxide-based photoradical polymerization initiator exceeds 99% by mass (relative to component (C)), assuming the total mass of the component (C) as 100% by mass (upper limit: 100% by mass), and it is preferable that the component (C) is composed of an acetophenone-based photoradical polymerization initiator and/or an acylphosphine oxide-based photoradical polymerization initiator (the above total content = 100% by mass). Similarly, "component (C) consists essentially of an acylphosphine oxide-based photoradical polymerization initiator" means that the total content of the acylphosphine oxide-based photoradical polymerization initiator exceeds 99% by mass (relative to the component (C)), assuming the total mass of the component (C) as 100% by mass (upper limit: 100% by mass), and it is preferable that the component (C) is composed of the acylphosphine oxide-based photoradical polymerization initiator (the above total content = 100% by mass).

<Component (D)>

Further, the photocurable resin composition according to the present invention preferably contains hydrophobic silica as a component (D). The component (D) can provide a photocurable resin composition that forms a cured product with even less compression set and excellent sealing properties at low compression. The component (D) can include silica hydrophobized with organochlorosilane, dimethylsilicone, hexamethyldisilazane, or the like.

Examples of the commercially available product (D) include commercially available products such as product name Aerosil (registered trademark) R974, R972, R972V, R972CF, R805, R812, R812S, R816, R8200, RY200, RX200, RY200S, and R202, manufactured by Nippon Aerosil Co., Ltd.

The average particle diameter of the component (D) is not particularly limited, but is, for example, 1 nm or more and 50 nm or less, more preferably 3 nm or more and 30 nm or less, particularly preferably 5 nm or more and 20 nm or less. The component (D) having such an average particle diameter is preferable from the viewpoint that a photocurable resin composition that forms a cured product with even less compression set can be obtained. The average particle

diameter is the particle diameter (D50) at a cumulative volume ratio of 50% in the particle diameter distribution determined by a laser diffraction scattering method.

An amount of the component (D) is not particularly limited, but is preferably 0.1 to 20 parts by mass, more preferably 0.5 to 15 parts by mass, particularly preferably 1.1 to 12 parts by mass, most preferably 1.5 parts by mass or more and less than 9 parts by mass, relative to 100 parts by mass of the component (A). Within the above range, there can be obtained a photocurable resin composition that forms a cured product with even less compression set and excellent sealing properties at low compression. In addition, when using two or more types of the component (A), it is preferable that the total amount thereof satisfies the above relationship. Similarly, when using two or more types of the component (D), it is preferable that the total amount thereof satisfies the above relationship.

Further, from the viewpoint of forming a cured product with low compression set and excellent sealing properties at low compression, the photocurable resin composition according to the present invention is preferably composed essentially of the above components (A) to (C). In addition, in another embodiment, the photocurable resin composition according to the present invention is preferably composed essentially of the above-described components (A) to (D). Further, as another embodiment, the photocurable resin composition according to the present invention is preferably composed essentially of the components (A) to (C) and an inorganic filler (not including the component (D) of the present invention) as detailed below. Further, as another embodiment, the photocurable resin composition according to the present invention is preferably composed essentially of the components (A) to (D) and an inorganic filler (not including the component (D) of the present invention) as detailed below.

In the above embodiment, "photocurable resin composition is composed essentially of X" means that the total content of X exceeds 99% by mass (upper limit: 100% by mass), assuming the total mass of the photocurable resin composition as 100% by mass (relative to the photocurable resin composition). Preferably, the photocurable resin composition is composed of X (the above total content = 100% by mass). For example, "the photocurable resin composition is composed essentially of the above components (A) to (C)" means that the total content of the components (A) to (C) exceeds 99% by mass (upper limit: 100% by mass), assuming the total mass of the photocurable resin composition as 100% by mass (relative to the photocurable resin composition), and it is preferable that the photocurable resin composition is composed of the above components (A) to (C) (the above total content = 100% by mass) .

In addition, for the preferable contents of the components (A) to (D) and the inorganic filler in the above embodiment, the content ranges described in the explanation section for each component above are referred to, and the preferable ranges can be selected and combined.

<Optional component>

For the photocurable resin composition of the present invention, as long as the purpose of the present invention is not impaired, additives can be used such as (meth)acryloyl group-containing oligomer or polymer (not containing the component (A) of the present invention), (meth)acrylate monomer (not containing the component (B) of the present invention), inorganic fillers (not containing the component (D) of the present invention), organic peroxides, curing accelerators, storage stabilizers, antioxidants, light stabilizers, plasticizers, pigments, flame retardants, and surfactants.

The (meth)acryloyl group-containing oligomer or polymer (not containing the component (A) of the present invention) is not particularly limited, but examples thereof include urethane (meth)acrylate with polybutadiene skeleton, urethane (meth)acrylate with hydrogenated polybutadiene skeleton, urethane (meth)acrylate with polycarbonate skeleton, urethane (meth)acrylate with polyether skeleton, urethane (meth)acrylate with polyester skeleton, urethane (meth)acrylate with castor oil skeleton, isoprene-based (meth)acrylate, hydrogenated isoprene-based (meth)acrylate, epoxy (meth)acrylate, and (meth)acrylic group-containing acrylic polymer. Among these, because of having excellent compatibility with the component (A) and component (B) of the present invention, urethane (meth)acrylate with polybutadiene skeleton, urethane (meth)acrylate with hydrogenated polybutadiene skeleton, urethane (meth)acrylate with castor oil skeleton, isoprene-based (meth)acrylate, and hydrogenated isoprene-based (meth)acrylate are preferable. In the present invention, the oligomer refers to a compound having a structure with monomer repeating units in the main chain, and consisting of 2 to 100 repeating units. In addition, these may be used singly or in combination of two or more. An amount (content) of the (meth)acryloyl group-containing oligomer or polymer contained is not particularly limited, but is preferably 5 to 300 parts by mass, more preferably 20 to 150 parts by mass, and particularly preferably 30 to 50 parts by mass, relative to 100 parts by mass of the component (A). Within the above range, there can be obtained a photocurable resin composition that forms a cured product with even less compression set and excellent sealing properties at low compression.

Examples of the (meth)acrylate monomer other than the component (B) include acrylate monomer having a linear or branched alkyl group having 1 to 4 carbon atoms, and methacrylate monomer (for example, a methacrylate monomer having a linear or branched alkyl group having 5 to 30 carbon atoms or a methacrylate monomer having an alicyclic hydrocarbon group having 5 to 30 carbon atoms). The (meth)acrylate monomer other than the component (B) may be contained within a range that does not impair the purpose of the present invention, but in order to obtain the

effect(s) by the present invention more significantly, it is preferable that these components are not contained. That is, the photocurable resin composition according to the present invention preferably contains substantially no (meth)acrylate monomer other than the component (B). Specifically, a content (total amount) of (meth)acrylate monomer other than the component (B) in the photocurable resin composition is 0.1% by mass or less, preferably 0.01% by mass or less, more preferably 0.001% by mass or less (lower limit: 0% by mass), relative to the total mass of the photocurable resin composition. Therefore, in one preferred embodiment, the (meth)acrylate monomer contained in the photocurable resin composition consists essentially of the component (B).

For the purpose of improving the elastic modulus of cured products and fluidity, the photocurable resin composition of the present invention may contain an inorganic filler (not containing the component (D) of the present invention) to an extent that does not impair storage stability. Herein, the inorganic filler refers to a compound made of components that do not react with the components (A) to (C) and do not exhibit catalytic activity. Specific examples of the inorganic filler include inorganic powder, metallic powder, and the like. Examples of the inorganic powder filler include glass, hydrophilic fumed silica, alumina, mica, ceramics, silicone rubber powder, calcium carbonate, aluminum nitride, carbon powder, kaolin clay, dried clay minerals, and dried diatomaceous earth. These may be used singly or in combination of two or more. An amount (content) of the inorganic filler contained is not particularly limited, but is preferably 0.1 to 100 parts by mass, more preferably 1 to 50 parts by mass, and particularly preferably 2 to 30 parts by mass, relative to 100 parts by mass of the component (A). When using two or more types of the component (A), it is preferable that the total amount thereof satisfies the above relationship. Similarly, when using two or more types of the inorganic filler, it is preferable that the total amount of each filler satisfies the above relationship.

The photocurable resin composition of the present invention may contain an organic peroxide for the purpose of imparting curability by heating or redox reaction. It is preferable to use a redox reaction because radical species can be generated at room temperature. The organic peroxide is not particularly limited, but examples thereof include: ketone peroxides such as methyl ethyl ketone peroxide, cyclohexanone peroxide, 3,3,5-trimethylcyclohexanone peroxide, methyl cyclohexanone peroxide, methyl acetoacetate peroxide, and acetylacetone peroxide; peroxyketals such as 1,1-bis(t-butylperoxy)-3,3,5-trimethylcyclohexane, 1,1-bis(t-butylperoxy)cyclohexane, 2,2-bis(t-butylperoxy)octane, n-butyl-4,4-bis(t-butylperoxy)valerate, and 2,2-bis(t-butylperoxy)butane; hydroperoxides such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutyl hydroperoxide; dialkyl peroxides such as di-t-butyl peroxide, t-butylcumyl peroxide, dicumyl peroxide, $\alpha,\alpha'$-bis(t-butylperoxy-m-isopropyl)benzene, 2,5-dimethyl-2,5-di(t-butylperoxy)hexane, and 2,5-dimethyl-2,5-di(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, and m-toluoyl peroxide; peroxydicarbonates such as diisopropyl peroxydicarbonate, di-2-ethylhexyl peroxydicarbonate, di-n-propyl peroxydicarbonate, bis-(4-t-butylcyclohexyl) peroxydicarbonate, dimyristyl peroxydicarbonate, di2-ethoxyethyl peroxydicarbonate, dimethoxyisopropyl peroxydicarbonate, and di(3-methyl-3-methoxybutyl)peroxydicarbonate, diallyl peroxydicarbonate; peroxyesters such as t-butylperoxyacetate, t-butylperoxyisobutyrate, t-butylperoxypivalate, t-butylperoxyneodecanoate, cumyl peroxyneodecanoate, t-butylperoxy-2-ethylhexanoate, t-butylperoxy-3,5,5-trimethylhexanoate, t-butylperoxylaurate, t-butylperoxybenzoate, di-t-butylperoxyisophthalate, 2,5-dimethyl-2,5-di(benzoylperoxy)hexane, t-butyl peroxymaleic acid, t-butyl peroxyisopropyl carbonate, cumyl peroxy octoate, t-hexyl peroxy neodecanoate, t-hexyl peroxy pivalate, t-butyl peroxy neohexanoate, t-hexyl peroxy neohexanoate, and cumyl peroxy neohexanoate; acetylcyclohexylsulfonyl peroxide, and t-butylperoxyallyl carbonate. These organic peroxides may be used singly or in combination. Among these, cumene hydroperoxide is preferably used from the viewpoint of curability. An amount (content) of the organic peroxide contained is not particularly limited, but is preferably 0.1 to 30 parts by mass relative to 100 parts by mass of the component (A).

When using an organic peroxide in the present invention, a curing accelerator can be added for the purpose of accelerating the redox reaction. Such curing accelerators are not particularly limited, but saccharin (o-benzoic sulfimide), hydrazine compounds, amine compounds, mercaptan compounds, transition metal-containing compounds, and the like are preferably used.

Examples of the hydrazine compound include 1-acetyl-2-phenylhydrazine, 1-acetyl-2(p-tolyl)hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbazate, p-nitrophenylhydrazine, and p-trisulfonyl hydrazide.

Examples of the amine compound include: 2-ethylhexylamine; heterocyclic secondary amines such as 1,2,3,4-tetrahydroquinaldine; heterocyclic tertiary amines such as quinoline, methylquinoline, quinaldine, and quinoxaline phenazine; aromatic tertiary amines such as N,N-dimethyl-p-toluidine, N,N-dimethylanisidine, and N,N-dimethylaniline; azole compounds such as 1,2,4-triazole, oxazole, oxadiazole, thiadiazole, benzotriazole, hydroxybenzotriazole, benzoxazole, 1,2,3-benzothiadiazole, and 3-mercaptobenzotriazole.

Examples of the mercaptan compound include n-dodecyl mercaptan, ethyl mercaptan, butyl mercaptan, tris-[(3-mercaptopropionyloxy)-ethyl]-isocyanurate, pentaerythritol tetrakis (3-mercaptopropionate), dipentaerythritol hexakis (3-mercaptopropionate), trimethylolpropane tris (3-mercaptopropionate), trimethylolpropane tristhioglycolate, and pentaerythritol tetrakisthioglycolate.

As the transition metal-containing compound, preferably a metal chelate complex salt is used. Examples thereof include pentadione iron, pentadione cobalt, pentadione copper, propylene diamine copper, ethylene diamine copper, iron naphthate, nickel naphtate, cobalt naphtate, copper naphtate, copper octate, iron hexoate, iron propionate, and acetylacetone vanadium.

The above curing accelerators may be used singly or in combination. Among these, a mixture of saccharin, a hydrazine-based compound, an amine-based compound, and a transition metal-containing compound is more preferable because of a good effect for curing acceleration. An amount (content) of the curing accelerator contained is not particularly limited, but is preferably 0.01 to 20 parts by mass relative to 100 parts by mass of the component (A).

The photocurable resin composition of the present invention may contain a storage stabilizer. As the storage stabilizer, there can also be used radical absorbers such as benzoquinone, hydroquinone, hydroquinone monomethyl ether, and metal chelating agents such as ethylenediaminetetraacetic acid or a 2-sodium salt thereof, oxalic acid, acetylacetone, o-aminophenol. These may be used singly or in combination. An amount (content) of the storage stabilizer contained is not particularly limited, but is preferably 0.0001 to 20 parts by mass relative to 100 parts by mass of the component (A) .

The photocurable resin composition of the present invention may contain an antioxidant. Examples of the antioxidant include: quinone compounds such as β-naphthoquinone, 2-methoxy-1,4-naphthoquinone, methylhydroquinone, hydroquinone, hydroquinone monomethyl ether, mono-t-butylhydroquinone, 2,5-di-t-butylhydroquinone, p-benzoquinone, 2,5-diphenyl-p-benzoquinone, and 2,5-di-t-butyl-p-benzoquinone; phenols such as 2,2-methylene-bis(4-methyl-6-t-butylphenol), catechol, t-butylcatechol, 2-butyl-4-hydroxyanisole, 2,6-di-t-butyl-p-cresol, 2-t-butyl-6-(3-t-butyl-2-hydroxy-5-methylbenzyl)-4-methyl phenyl acrylate, 2-[1-(2-hydroxy-3,5-di-t-pentylphenyl)ethyl]-4,6-di-t-pentylphenyl acrylate, 4,4'-butylidenebis(6-t-butyl-3-methylphenol), 4,4'-thiobis(6-t-butyl-3-methylphenol), 3,9-bis[2-[3-(3-t-butyl-4-hydroxy-5-methylphenyl)propionyloxy]-1,1-dimethylethyl]-2,4,8,10-tetraoxa spiro[5,5]undecane, pentaerythritol tetrakis[3-(3,5-di-t-butyl-4-hydroxyphenyl)propionate], thiodiethylene bis[3-(3,5-di-t-butyl-4-hydroxyphenyl)propionate], octadecyl-3-(3,5-di-t-butyl-4-hydroxyphenyl)propionate, N,N'-hexane-1,6-diylbis[3-(3,5-di-t-butyl-4-hydroxyphenyl)propionamide], benzenepropanoic acid, 3,5-bis(1,1-dimethylethyl)-4-hydroxy, C7 to C9 side chain alkyl ester, 2,4-dimethyl-6-(1-methylpentadecyl)phenol, diethyl [[3,5-bis(1,1-dimethylethyl)-4-hydroxyphenyl]methyl]phosphonate, 3,3',3",5,5',5"-hexa-t-butyl-a,a',a"-(mesitylene-2,4,6-tolyl)tri-p-cresol, calcium diethylbis[[3,5-bis(1,1-dimethylethyl)-4-hydroxyphenyl]methyl]phosphonate, 4,6-bis(octylthiomethyl)-o-cresol, ethylenebis(oxyethylene)bis[3-(5-t-butyl-4-hydroxy-m-tolyl)propionate], hexamethylenebis[3-(3,5-di-t-butyl-4-hydroxyphenyl)] propionate, 1,3,5-tris(3,5-di-t-butyl-4-hydroxybenzyl)-1,3,5-triazine-2,4,6(1H,3H,5H)-trione, 1,3,5-tris[(4-t-butyl-3-hydroxy-2,6-xylyl)methyl]-1,3,5-triazine-2,4,6(1H,3H,5H)-trione, a reaction product of N-phenylbenzenamine and 2,4,6-trimethylpentene, 2,6-di-t-butyl-4-(4,6-bis(octylthio)-1,3,5-triazin-2-ylamino)phenol, and picric acid; phosphorous compounds such as tris(2,4-di-t-butylphenyl)phosphite, tris[2-[[2,4,8,10-tetra-t-butyldibenzo[d,f][1,3,2]dioxaphosphephin-6-yl[oxy]ethyl]amine, bis(2,4-di-t-butylphenyl)pentaerythritol diphosphite, bis[2,4-bis(1,1-dimethylethyl)-6-methylphenyl]ethyl ester phosphorous acid, and tetrakis(2,4-di-t-butylphenyl)[1,1-bisphenyl]-4,4'-diylbisphosphonite, 6-[3-(3-t-butyl-4-hydroxy-5-methylphenyl)propoxy]-2,4,8,10-tetra-t-butyldibenz[d,f][1,3,2]dioxaphosphephine; and sulfur compounds such as dilauryl 3,3'-thiodipropionate, dimyristyl 3,3'-thiodipropionate, distearyl 3,3'-thiodipropionate, pentaerythrityltetrakis (3-laurylthiopropionate), and 2-mercaptobenzimidazole; amine compounds such as phenothiazine; lactone compounds; and vitamin E compounds. Among these, phenolic-based compounds are preferable. These may be used singly or in combination. An amount (content) of the antioxidant contained is not particularly limited, but is preferably 0.01 to 50 parts by mass relative to 100 parts by mass of the component (A).

The photocurable resin composition of the present invention may contain a light stabilizer. Examples of the light stabilizer include: hindered amine-based compounds such as bis(2,2,6,6-tetramethyl-4-piperidyl) sebacate, bis(1,2,2,6,6-pentamethyl-4-piperidyl) sebacate, 4-benzoyloxy-2,2,6,6-tetramethylpiperidine, 1-[2-[3-(3,5-di-t-butyl-4-hydroxyphenyl)propionyloxy]ethyl]-4-[3-(3,5-di-t-butyl-4-hydroxyphenyl)propionyloxy]-2,2,6,6-tetramethylpiperidine, 1,2,2,6,6-pentamethyl-4-piperidinyl-methacrylate, bis(1,2,2,6,6-pentamethyl-4-piperidinyl)[[3,5-bis(1,1-dimethylethyl)-4-hydroxyphenyl]methyl]butylmalonate, decanedioic acid bis(2,2,6,6-tetramethyl-1(octyloxy)-4-piperidinyl) ester, a reaction product of 1,1-dimethylethyl hydroperoxide and octane, N,N',N",N"'-tetrakis-(4,6-bis-(butyl-(N-methyl-2,2,6,6-tetramethylpiperidin-4-yl)amino)-triazine-2-yl)-4,7-diazadecane-1,10-diamine, polycondensate of dibutylamine/1,3,5-triazine/N,N'-bis(2,2,6,6-tetramethyl-4-piperidyl-1,6-hexamethylenediamine and N-(2,2,6, 6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene[(2,2,6,6-tetramethyl-4-piperidyl)imino], a polymer of dimethyl succinate and 4-hydroxy-2,2,6,6-tetramethyl-1-piperidineethanol, 2,2,4,4-tetramethyl-20-(β-lauryloxycarbonyl)ethyl-7-oxa-3,20-diazadispiro[5.1.11.2]heneicosan-21-one, β-alanine-N-(2,2,6,6-tetramethyl-4-piperidinyl)-dodecyl ester/tetradecyl ester, N-acetyl-3-dodecyl-1-(2,2,6,6-tetramethyl-4-piperidinyl)pyrrolidine-2,5-dione, 2,2,4,4-tetramethyl-7-oxa-3,20-diazadispiro[5,1,11,2]heneicosan-21-one, 2,2,4,4-tetramethyl-21-oxa-3,20-diazadicyclo[5,1,11,2]-heneicosan-20-propanoic acid dodecyl ester/tetradecyl ester, propanedioic acid-[(4-methoxyphenyl)-methylene]-bis(1,2,2,6,6-pentamethyl-4-piperidinyl) ester, higher fatty acid ester of 2,2,6,6-tetramethyl-4-piperidinol, 1,3-benzenedicarboxamide, and N,N'-bis(2,2,6,6-tetramethyl-4-piperidinyl); benzophenone-based compounds such as octabenzone; benzotriazole-based compounds such as 2-(2H-benzotriazol-2-yl)-4-(1,1,3,3-tetramethylbutyl)phenol, 2-(2-hydroxy-5-methylphenyl)benzotriazole, 2-[2-hydroxy-3-(3,4,5,6-tetrahydrophthalimido-methyl)-5-methylphenyl]benzotriazole, 2-(3-t-butyl-2-hydroxy-5-methylphenyl)-5-chlorobenzotriazole, 2-(2-hydroxy-3,5-di-t-pentylphenyl)benzotriazole, a reaction product of methyl 3-(3-(2H-benzotriazol-2-yl)-5-t-butyl-4-hydroxyphenyl)propionate and polyethylene glycol, and 2-(2H-benzotriazol-2-yl)-6-dodecyl-4-methylphenol, benzoate-based compounds such as 2,4-di-t-butylphenyl-3,5-di-t-butyl-4-hydroxybenzoate; and triazine-based compounds such as 2-(4,6-diphenyl-1,3,5-triazin-2-yl)-5-[(hexyl)oxy]phenol. Particularly preferable are hindered amine-based compounds. These may be used singly or in combination. An amount (content) of the light stabilizer contained is not particularly limited, but is preferably 0.01 to 50 parts by mass relative to 100 parts by mass of the component (A).

The photocurable resin composition of the present invention may contain an adhesion promoter. Examples of the adhesion promoter include 3-(meth)acryloxypropylmethyldimethoxysilane, 3-(meth)acryloxypropyltrimethoxysilane, 3-(meth)acryloxypropylmethyldiethoxysilane, 3-(meth)acryloxypropyltriethoxysilane, 3-acryloxypropyltrimethoxysilane, (meth)acryloxyoctyltrimethoxysilane, vinyltrimethoxysilane, vinyltrichlorosilane, vinyltriethoxysilane, vinyl-tris(β-methoxyethoxy)silane, γ-chloropropyltrimethoxysilane, β-(3,4-epoxycyclohexyl)ethyltrimethoxysilane, γ-glycidoxypropyltrimethoxysilane, γ-mercaptopropyltrimethoxysilane, γ-aminopropyltriethoxysilane, N-β-(aminoethyl)-γ-aminopropyltrimethoxysilane, N-β-(aminoethyl)-γ-aminopropylmethyldimethoxysilane, γ-ureidopropyltriethoxysilane, hydroxyethyl (meth)acrylate phosphate, (meth)acryloxyoxyethyl acid phosphate, (meth)acryloxyoxyethyl acid phosphate monoethylamine half salt, and 2-hydroxyethyl (meth)acrylic acid phosphate. Among these, hydroxyethyl (meth)acrylate phosphate, (meth)acryloxyoxyethyl acid phosphate, (meth)acryloxyoxyethyl acid phosphate monoethylamine half salt, and 2-hydroxyethyl (meth)acrylic acid phosphate are preferable. These may be used singly or in combination. An amount (content) of the adhesion promoter contained is preferably 0.05 to 30 parts by mass, more preferably 0.2 to 10 parts by mass, relative to 100 parts by mass of the component (A).

The photocurable resin composition of the present invention can be produced by a conventionally known method. For example, the photocurable resin composition can be produced by blending predetermined amounts of the components (A) to (C), component (D) added as necessary and the above optional components, and mixing at a temperature of preferably 10 to 70°C for preferably 0.1 to 5 hours using a mixing means such as a mixer (for example, a planetary mixer). In addition, it is preferable to perform production under a light-shielding environment.

A method for curing the photocurable resin composition according to the present invention to provide a cured product is not particularly limited, and can be appropriately selected depending on the desired use. One example is a method in which a photocurable resin composition is applied to an adherend to form a coating film (coating method/step), and then the coating film is cured (curing method/step). Such a method will be described below, but the method for obtaining a cured product according to the present invention is not limited to the method described below, and can be modified as appropriate.

<Coating method/step>

As a method for applying the photocurable resin composition of the present invention to an adherend, for example, there can be used methods such as dispensing using an automatic coating machine, spraying, inkjet, screen printing, gravure printing, dipping, spin coating, and bead coating, but among these, the photocurable resin composition of the present invention not only can form a cured product with low compression set and excellent sealing properties at low compression but also has a low viscosity, and thus is most suitable for dispensing. It is preferable that the photocurable resin composition of the present invention is liquid at 25°C from a viewpoint of coating properties.

<Curing method/step>

The photocurable resin composition of the present invention can be cured by irradiation with active energy rays such as ultraviolet rays and visible rays. An active energy ray source used in this case is not particularly limited, but examples thereof include low-pressure mercury lamp, medium-pressure mercury lamp, high-pressure mercury lamp, ultrahigh-pressure mercury lamp, black light lamp, microwave-excited mercury lamp, metal halide lamp, sodium lamp, halogen lamp, xenon lamp, LED, fluorescent lamp, sunlight, and electron beam irradiation equipment. An irradiation amount (integrated light amount) of active energy ray irradiation is preferably 3 $kJ/m^2$ or more, more preferably 5 $kJ/m^2$ or more from the viewpoint of the properties of the cured product, and is preferably 70 $kJ/m^2$ or less, more preferably 60 $kJ/m^2$ or less, particularly preferably 50 $kJ/m^2$ or less from the viewpoint of takt time in the curing step.

<Cured product>

The cured product according to the present invention can be obtained by curing the photocurable resin composition of the present invention by irradiating with active energy rays such as ultraviolet rays by the above curing method.

That is, the second aspect of the present invention relates to a cured product obtained by irradiating the photocurable resin composition with light. The cured product of the present invention may be obtained by any curing method as long as the photocurable resin composition of the present invention is cured.

The cured product of the present invention or the cured product obtained by curing the photocurable resin composition of the present invention or the sealing agent of the present invention described below has excellent low compression sealing properties. Specifically, the evaluation results for the low compression sealing properties of the cured product of the photocurable resin composition of the present invention are preferably 300 kPa or more, more preferably more than 300 kPa, particularly preferably 400 kPa or more. On the other hand, the upper limit is not particularly limited, but is substantially 5000 kPa or less. In the evaluation result for the low compression sealing properties of the cured product, the value measured by the method described in Examples below is adopted.

The cured product of the present invention or the cured product obtained by curing the photocurable resin composition of the present invention or the sealing agent of the present invention described below has low compression set. In a preferred embodiment, the cured product of the photocurable resin composition of the present invention has a compression set of 20% or less after 100 hours in a 50% compressed state (compressed by 50% of the thickness or height of the cured product). In addition, the above compression set is preferably 15% or less, more preferably 10% or less, particularly preferably 5% or less, and most preferably 2.5% or less. On the other hand, the lower limit is not particularly limited, but is substantially 0% or more, and may be 1% or more. For the compression set of the cured product, the value measured by the method described in Examples below is adopted.

The cured product of the present invention or the cured product obtained by curing the photocurable resin composition of the present invention or the sealing agent of the present invention described below is not particularly limited, but it is preferable that hardness (hardness measured by a A-type durometer) of the cured product be 3 to 95, more preferable that the hardness be 5 to 90, still more preferable that the hardness be 15 to 65, particularly preferable that the hardness be 15 to 50, and most preferable that the hardness be more than 15 to 40 or less. For the hardness of the cured product, a value measured by the method described in Examples below is adopted. The cured product of the present invention or the cured product obtained by curing the photocurable resin composition of the present invention or the sealing agent of the present invention described below is not particularly limited, but it is preferable that tensile strength of the cured product be 0.6 MPa or more, more preferable that the tensile strength be 0.7 MPa or more. On the other hand, the upper limit is not particularly limited, but is substantially 100 MPa or less. For the tensile strength of the cured product, a value measured by the method described in Examples below is adopted. The cured product of the present invention or the cured product obtained by curing the photocurable resin composition of the present invention or the sealing agent of the present invention described below is not particularly limited, but it is preferable that elongation rate of the cured product be 240% or more, more preferable that the elongation rate be 300% or more. On the other hand, the upper limit is not particularly limited, but is substantially 3000% or less. For the elongation rate of the cured product, a value measured by the method described in Examples below is adopted.

<Application and sealing agent>

The application of the photocurable resin composition of the present invention preferably used is a sealing agent. That is, the third aspect of the present invention relates to a sealing agent containing the photocurable resin composition. In addition, the present invention provides a cured product obtained by irradiating the sealing agent of the present invention with light. In the present invention, the "sealing agent" may include applications such as an adhesive, coating agent, casting agent, and potting agent. For use in such applications, the photocurable resin composition of the present invention is preferably liquid at 25°C.

Since the photocurable resin composition or the cured product thereof of the present invention is a rubber elastic body with low gas permeability, low moisture permeability, excellent heat resistance, excellent acid resistance, and excellent flexibility, specific examples of applications of the sealing agent include use in laminated bodies, sensors, substrates, and pharmaceuticals/medical instruments/equipment such as fuel cells, solar cells, dye-sensitized solar cells, lithium-ion batteries, electrolytic capacitors, liquid crystal displays, organic EL displays, electronic papers, LEDs, hard disk devices, photodiodes, optical communications/circuits, electric wires, cables, optical fibers, optical isolators, IC cards, and the like. Among these applications, the photocurable resin composition of the present invention has low compression set and can form a cured product with excellent sealing properties at low compression, and thus the application for fuel cells (particularly solid polymer fuel cells), hard disk devices, liquid crystal displays, or organic EL displays is particularly preferable, and the application for fuel cells (particularly solid polymer fuel cells) is particularly preferable.

The sealing agent according to the present invention may be used in any position, but is preferably used around members such as separators, frames, electrolyte membranes, fuel electrodes, air electrodes (oxygen electrodes), and membrane electrode assemblies in fuel cells.

<Fuel cell>

A fuel cell is a power generation device that generates electricity by chemically reacting hydrogen and oxygen. In addition, there are four types of fuel cells: polymer electrolyte fuel cells, phosphoric acid fuel cells, molten carbonate fuel cells, and solid oxide fuel cells. Among these, polymer electrolyte fuel cells have high power generation efficiency while an operating temperature is relatively low (around 80°C), and thus are used for applications such as power sources for automobiles, home power generators, small power supplies for electronic devices such as mobile phones, and emergency power supplies.

As shown in Fig. 1, a cell of a typical polymer electrolyte fuel cell 1 includes: a membrane electrode assembly 5 (MEA) having a polymer electrolyte membrane 4 sandwiched between an air electrode 3a and a fuel electrode 3b; a frame 6 that supports the MEA 5; and a separator 2 with a gas flow path. In addition, when starting up the polymer electrolyte fuel cell, fuel gas (hydrogen gas) and oxidizing gas (oxygen gas) are supplied through the oxidizing gas flow path 8a and the fuel gas flow path 8b. In addition, cooling water flows through a flow path 9 for the purpose of alleviating heat generation during power generation. A package obtained by stacking several hundred sheets of the cell is called a cell stack 10 of a polymer electrolyte fuel cell 11, as shown in Fig 2.

When fuel gas (hydrogen gas) is supplied to the fuel electrode and oxidizing gas (oxygen gas) is supplied to the oxygen electrode (air electrode), the following reactions occur at each electrode, and the overall reaction generates water ($H_2 + 1/2O_2 \rightarrow H_2O$). To explain in detail, as shown below, protons ($H^+$) generated at the fuel electrode diffuse through the solid polymer membrane (polymer electrolyte membrane), move to the oxygen electrode side, and reacted with oxygen to produce water ($H_2O$) which is discharged from the oxygen electrode side.

Fuel electrode (anode): : $H_2 \rightarrow 2H^+ + 2e^-$

Oxygen electrode (cathode): $1/2O_2$-$+2H^+ + 2^{e-}$-$H_2O$

To start up a polymer electrolyte fuel cell, it is necessary to separately supply a fuel gas containing hydrogen to an anode and an oxidizing gas containing oxygen to a cathode. This is because if one of the gases mixes with the other gas due to insufficient separation, power generation efficiency may decrease. For this reason, a sealing agent has been often used to prevent leakage of fuel gas, oxygen gas, or the like. Specifically, the sealing agent has been used between adjacent separators, between a separator and a frame, between a frame and a polymer electrolyte membrane or a membrane electrode assembly (MEA). The sealing agent of the present invention can be suitably used as a curable sealing agent for fuel cells around one or more members selected from the group consisting of separators, frames, polymer electrolyte membranes, fuel electrodes, air electrodes, and membrane electrode assemblies, which are members of fuel cells. Particularly, the sealing agent of the present invention can be suitably used as a sealing agent between adjacent separators in a fuel cell, or between the frame and the polymer electrolyte membrane or membrane electrode assembly (MEA) in a fuel cell.

That is, the third aspect of the present invention relates a fuel cell including any one of the group consisting of: a seal portion between adjacent separators in a fuel cell; a seal portion between a frame and an electrolyte membrane in a fuel cell; and a seal portion between a frame and a membrane electrode assembly in a fuel cell, in which any of the above seal portions is a cured product according to the present invention (the space between adjacent separators in a fuel cell or between a frame and an electrolyte membrane or membrane electrode assembly in a fuel cell is sealed with the cured product according to the present invention). In addition, in the above aspect, the fuel cell is preferably a polymer electrolyte fuel cell.

Examples of the polymer electrolyte membrane 4 include a cation exchange membrane having ion conductivity. The polymer electrolyte membrane preferably includes a fluorine-based polymer having a sulfonic acid group represented by the following formula (3), in view of chemically stability and resistance to operation at high temperatures. The commercially available products thereof include Nafion (registered trademark) manufactured by DuPont de Nemours, Inc., Flemion (registered trademark) manufactured by AGC Corporation, and Aciplex (registered trademark) manufactured by Asahi Kasei Corp. Generally, the polymer electrolyte membrane is a material difficult for bonding, but can be bonded by using the photocurable resin composition of the present invention.

Formula (3):

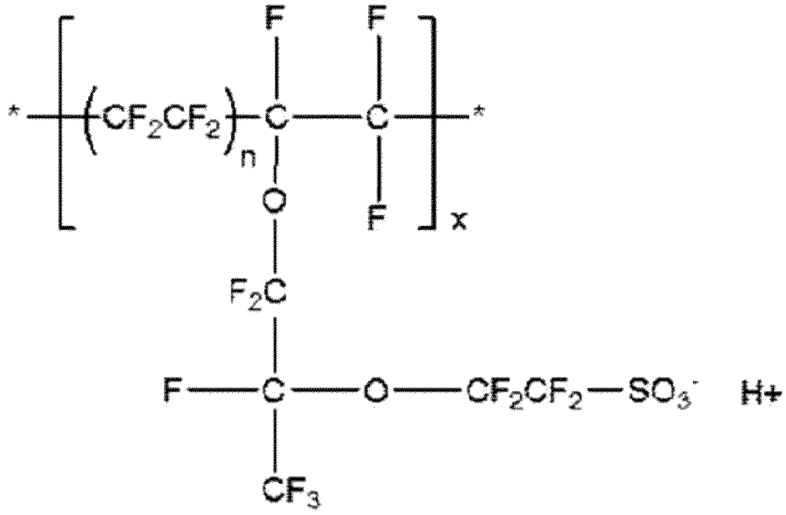

. . . (3)

The fuel electrode 3b is called a hydrogen electrode or an anode, and a known one can be used. For example, there may be used a material having a catalyst such as platinum, nickel, or ruthenium supported on carbon. In addition, the air electrode 3a is called an oxygen electrode or a cathode, and a known one can be used. For example, there may be used a material having a catalyst such as platinum or an alloy supported on carbon. A surface of each electrode may be provided with a gas diffusion layer that functions to diffuse gas and moisturize a polymer electrolyte membrane. A known gas diffusion layer may be used, and examples thereof include carbon paper, carbon cloth, and carbon fiber.

As shown in Fig. 1, the separator 2 has fine, uneven flow paths through which a fuel gas or an oxidizing gas passes and is supplied to the electrodes. In addition, the separator 2 is made of aluminum, stainless steel, titanium, graphite, carbon, or the like.

The frame 6 supports and reinforces the thin polymer electrolyte membrane 4 or MEA 5 so as not to result in breakage. Examples of a material for the frame 6 include thermoplastic resins such as polyvinyl chloride, polyethylene naphthalate (PEN), polyethylene terephthalate, polypropylene, and polycarbonate. In addition, in order to bond members together using the photocurable resin composition or the cured product thereof of the present invention, it is preferable that the members can transmit light.

The fuel cell of the present invention is a fuel cell containing a sealed part with the photocurable resin composition or a cured product thereof of the present invention. Examples of member that requires to be sealed in a fuel cell include a separator, a frame, a polymer electrolyte membrane, a fuel electrode, an air electrode, and an MEA, and a seal portion may be formed between these members. More specific examples of the location to be sealed (locations where seal portions are formed) include a space between adjacent separators, a space between a separator and a frame, and a space between a frame and a polymer electrolyte membrane or MEA. The photocurable resin composition or the sealing agent of the present invention is irradiated with energy rays such as light and cured, which may provide the cured product thereof. The photocurable resin composition or sealing agent of the present invention or a cured product thereof may be used as a seal portion around a member such as separator, frame, polymer electrolyte membrane, fuel electrode, air electrode, and electrolyte membrane electrode assembly in a fuel cell. The photocurable resin composition or sealing agent of the present invention or a cured product thereof may be suitably used for a seal portion between adjacent separators in a fuel cell, or a seal portion between a frame and a polymer electrolyte membrane or membrane electrode assembly in a fuel cell. A main purpose of the sealing "between the separator and the frame" or "between the polymer electrolyte membrane or MEA and the frame" is to prevent gas mixing or leakage, and a purpose of the sealing between adjacent separators is to prevent gas leakage and to prevent cooling water from leaking to the outside from the cooling water flow path. An acid generated from the polymer electrolyte membrane would create a strong acid atmosphere, and thus the sealing agent may be required to have acid resistance.

<Sealing method>

A sealing method using the photocurable resin composition of the present invention is not particularly limited, but typical examples thereof include a form-in-place gasket (FIPG) method, a cure-in-place gasket (CIPG) method, and a mold-in-place gasket (MIPG) method, a liquid injection molding method, and the like. In the present description, "seal" means sealing, and "sealing agent" means sealing material. A sealing agent may be called a "gasket."

The FIPG method is an adhesive seal method of applying a photocurable resin composition to one flange as

a part to be sealed with an automatic coating machine and the like, and in the state of being bonded to another flange, irradiating the photocurable resin composition with active energy rays such as ultraviolet rays from the flange side capable of transmitting light, to be cured to make the flanges adhered and sealed. The method may be used to seal at least a portion between at least two flanges of a part to be sealed having at least two flanges. In this case, at least one of the flanges can transmit active energy rays. The method includes a step of applying the photocurable resin composition of the present invention on at least one surface of the flanges, a step of bonding one flange to which the photocurable resin composition is applied and the other flange via the photocurable resin composition, and a step of irradiating it with an active energy ray through the flange that can transmit light of active energy rays, to cure the photocurable resin composition and to seal at least a portion between the at least two flanges. Thus, one embodiment of the present invention can provide a method for sealing at least a portion between two flanges wherein at least one of the flanges is a flange that can transmit light of active energy rays, the method including a step of applying the photocurable resin composition of the present invention to a surface of one flange, a step of bonding the flange applied with the photocurable resin composition and another flange via the photocurable resin composition, and a step of irradiating the photocurable resin composition with an active energy ray through the flange that can transmit light of active energy rays, to cure the photocurable resin composition and to seal at least a portion between the two flanges.

The CIPG method is a method including a step of subjecting the photocurable resin composition to bead-application onto a flange of a part to be sealed with a screen printing coating machine, an automatic coating machine, and the like, and irradiating the photocurable resin composition with active energy rays such as ultraviolet rays to cure the photocurable resin composition and to form a gasket, and a step of bonding to another flange and compression sealing. The method may be used in sealing at least a portion between the at least two flanges of a part to be sealed having at least two flanges. The method includes a step of applying the photocurable resin composition to at least one of the flanges, a step of irradiating the applied photocurable resin composition with active energy rays to cure the photocurable resin composition and to form a gasket made of a cured product of the photocurable resin composition, and a step of disposing the other flange on the gasket and press-bonding the one flange applied with the photocurable resin composition and the other flange together via the gasket to seal at least a portion between the at least two flanges. That is, one embodiment of the present invention can provides a method for sealing at least a portion between at least two flanges of a part to be sealed having at least two flanges, the method including a step of applying the photocurable resin composition of the present invention to a surface of at least one of the flanges; a step of irradiating the photocurable resin composition with active energy rays to cure the photocurable resin composition and to form a gasket made of a cured product of the photocurable resin composition on the one flange; and a step of disposing the other flange on the gasket and press-bonding the one flange applied with the photocurable resin composition and the other flange together via the gasket to seal at least a portion between the at least two flanges.

The MIPG method is a method including pressing a mold made of a material that can transmit active energy rays to one flange of a part to be sealed in advance, injecting a photocurable resin composition into a cavity created between the mold and the flange, irradiating the photocurable resin composition with active energy rays such as ultraviolet rays for photocuring to form a gasket, and then bonding the flange to the other flange, to make the flanges compressed and sealed. The mold is preferably made of a light-transmittable material, and specific examples thereof include glass, polymethyl methacrylate (PMMA), polycarbonate, cycloolefin polymer, olefin, and the like. In addition, in order to facilitate removal from the mold after forming the gasket, it is preferable to apply a mold release agent such as fluorine-based, silicone-based, or other mold release agent in the mold in advance. The method may be used in sealing at least a portion between at least two flanges of a part to be sealed having at least two flanges. The method includes a step of disposing a mold for forming a gasket on at least one of the flanges, a step of injecting the photocurable resin composition into at least a portion of a gap between the mold for forming the gasket and the flange on which the mold is disposed, a step of irradiating the photocurable resin composition with active energy ray to cure the photocurable resin composition and to form a gasket made of a cured product of the photocurable resin composition, a step of removing the mold from the one flange, and a step of disposing the other flange on the gasket and press-bonding the one flange and the other flange together via the gasket to seal at least a portion between the at least two flanges. That is, one embodiment of the present invention can provide a method for sealing at least a portion between at least two flanges of a part to be sealed having at least two flanges, the method including a step of disposing a mold for forming a gasket on at least one of the flanges, a step of injecting the photocurable resin composition of the present invention into at least a portion of a gap between the mold for forming the gasket and the one flange on which the mold is disposed; a step of irradiating the photocurable resin composition with active energy rays to cure the photocurable resin composition and to form a gasket made of a cured product of the photocurable resin composition on the one flange; a step of removing the mold from the one flange, and a step of disposing the other flange on the gasket and press-bonding the one flange and the other flange via the gasket to seal at least a portion between the at least two flanges. In this case, it is preferable that the mold for forming the gasket can transmit active energy rays.

Liquid injection molding is a method that includes pouring the photocurable resin composition into a mold made of a light-transmissible material under a specific pressure, irradiating with active energy rays such as ultraviolet rays for

photocuring to form a gasket, and then, bonding one flange to the other flange via this gasket to make the flanges compressed and sealed. The mold is preferably made of a light-transmittable material, and specific examples thereof include glass, PMMA, polycarbonate, cycloolefin polymer, olefin, and the like. In addition, in order to facilitate removal from the mold after forming the gasket, it is preferable to apply a mold release agent such as a fluorine-based or silicone-based mold release agent to the mold in advance.

The specific operations, conditions, and the like in the FIPG method, CIPG method, MIPG method, and liquid injection molding can be used in the same manner as conventionally known operations, conditions, and the like, or modified as appropriate, except for using the photocurable resin composition or cured product of the present invention.

EXAMPLES

The present invention will be explained in more detail with reference to Examples below, but the present invention is not limited to these Examples. Unless otherwise specified, operations, tests, and the like were performed in an environment of 23°C and 50% RH. In addition, concentration and % represent mass concentration and % by mass, respectively, unless otherwise specified, and ratio represents mass ratio unless otherwise specified.

[Preparation of photocurable resin composition]

First, the components (A) to (D) and comparative components were prepared as follows. Then, each component was weighed so as to have the composition (unit: parts by mass) shown in Table 1, and mixed for 60 minutes with a planetary mixer at room temperature (25°C) under light shielding to provide a photocurable resin composition. The obtained photocurable resin compositions (photocurable resin compositions of each Example and each Comparative Example) were liquid at 25°C. The detailed amount (content) of each component added is as described in Table 1, and the unit of numerical values in Table 1 are "parts by mass" unless otherwise specified. The item "parts by mass of b2 / parts by mass of b1" represents the mass ratio of the component b2 to 1 part by mass of the component b1. Blank columns in Table 1 indicate that the corresponding component is not included.

<Synthesis Example 1: Production of polyisobutylene (a1) having an acryloyloxyethoxyphenyl group>

The inside of the 5L separable flask was purged with nitrogen, and then 200 mL of n-hexane and 2000 mL of butyl chloride were added, and the mixture was cooled to -70°C with stirring under a nitrogen atmosphere. Then, 840 mL (9 mol) of isobutylene, 12 g (0.05 mol) of p-dicumyl chloride, and 1.1 g (0.012 mol) of 2-methylpyridine were added. The reaction mixture was cooled to -70°C, and then 5.0 mL (0.05 mol) of titanium tetrachloride was added to start polymerization. Three hours after the start of polymerization, 40 g of phenoxy ethyl acrylate (LIGHT ACRYLATE (registered trademark) PO-A, manufactured by Kyoeisha Chemical Co., Ltd.) and 110 mL of titanium tetrachloride were added thereto. Thereafter, stirring was continued for 4 hours at -70°C, and then 1000 mL of methanol was added to stop the reaction. A supernatant was separated from the reaction solution, and the solvent and the like were distilled off. The product was dissolved in 3000 mL of n-hexane, washed 3 times with 3000 mL of pure water, and reprecipitated from methanol. The solvent was distilled off under reduced pressure, and the obtained polymer was vacuum-dried at 80°C for 24 hours to provide polyisobutylene (a1) having an acryloyloxyethoxyphenyl group.

The a1 contains a $-[CH_2C(CH_3)_2]-$ unit and has two acryloyl groups. More specifically, the a1 is a polymer of the above formula (1), wherein $R^1$ represents a p-phenylene group, PIB represents a polyisobutylene skeleton consisting of an isopropylene group ($-C(CH_3)_2-$) and a $-[CH_2C(CH_3)_2]-$ unit, $R^4$ represents a hydrocarbon group having 2 carbon atoms (ethylene group), $R^2$ and $R^3$ each independently represent a hydrogen atom, $R^5$ represents a hydrogen atom, and n is 2. The number average molecular weight (chromatography method, polystyrene conversion) of the a1 component was 11,100, and viscosity (25°C) of the a1 component was 1550 Pa·s. In addition, the a1 component was liquid at 25°C.

<Component (A)>

a1: polyisobutylene (a1) having an acryloyloxyethoxyphenyl group obtained in Synthesis Example 1

<Component (B)and comparative component>

The number of carbon atoms constituting the alicyclic hydrocarbon group or alkyl group and the form of the alkyl group for the component (B) and the comparative component are described in parentheses below.

b1-1: isobornyl acrylate (C10) (IBX-A manufactured by Kyoeisha Chemical Co., Ltd.)

b1-2: 4-tert-butylcyclohexyl acrylate (C10) (S R217 manufactured by Sartomer Co., Ltd.)

b'1: isobornyl methacrylate (C10) (Light ester IB-X manufactured by Kyoeisha Chemical Co., Ltd.)

b2-1: lauryl acrylate (C12) (Light ester LA manufactured by Kyoeisha Chemical Co., Ltd.)

b2-2: isostearyl acrylate (C18) (ISTA manufactured by OSAKA ORGANIC CHEMICAL INDUSTRY LTD.)

b2-3: isononyl acrylate (C9) (INA manufactured by OSAKA ORGANIC CHEMICAL INDUSTRY LTD.)

b2-4: n-octyl acrylate (C8) (NOAA manufactured by OSAKA ORGANIC CHEMICAL INDUSTRY LTD.)

b'2: lauryl methacrylate (C12) (Light ester L manufactured by Kyoeisha Chemical Co., Ltd.)

<Component (C)>

c1: ethyl (2,4,6-trimethylbenzoyl) phenyl phosphinate (DOUBLECURE (registered trademark) 1256 manufactured by DOUBLE BOND CHEMICAL IND. Co., Ltd.)

c2: 2,4,6-trimethylbenzoyl-diphenylphosphine oxide (OMNIRAD (registered trademark) TPO manufactured by IGM Resins B. V.)

<Component (D)>

d1: hydrophobic silica treated with dimethyl silicone oil (RY200 manufactured by Nippon Aerosil Co., Ltd.) with an average particle diameter of 12 nm.

[Evaluation]

The following tests (1) and (2) were performed on the photocurable resin compositions prepared in each Example and each Comparative Example. The results are shown in Table 1 below. The test method used in Examples and Comparative Examples in Table 1 are as follows. Being suitable was determined if at least both of the following (1) and (2) passed.

(1) Low compression sealability confirmation test

The sealability test was performed as follows. First, each photocurable resin composition was applied as a bead with a bead diameter width of 2.0 mm and a height of 1.0 mm using an automatic coating machine circularly onto a square pressure-resistant flange (made of aluminum) with a flange width of 10 mm and a flange frame size (inside) of 80 × 80 mm, and was irradiated with ultraviolet rays from above at an integrated light intensity of 40 kJ/$m^2$ for curing. Then, from above the cured bead, tightening was performed using a pressure-resistant flange of the same size under the control of using a spacer so that the bead was compressed by 20% (20% of the bead height was compressed). Thereafter, the flanges joined by beads were submerged in water, and there was performed a pressure test in which the internal pressure of the flange was increased to a maximum of 400 kPa. In this case, the pressure increase condition was 10 kPa/15 sec, and each stage was held for 1 minute, and the pressurization stage immediately before the leakage occurred was defined as pressure resistance (low compression sealability). The results are shown in Table 1. In the present invention, from the viewpoint of excellent reliability when using the photocurable resin composition as a sealing agent, for the evaluation result for low compression sealability, 200 kPa or more is passed, preferably 300 kPa or more, more preferably more than 300 kPa, and particularly preferably 400 kPa or more (upper limit: 5000 kPa). "uncured" in Table 1 means that the photocurable resin composition was not cured even after ultraviolet irradiation, and a cured product could not be obtained.

(2) Compression set properties

Each photocurable resin composition was applied to a 70 mm × 70 mm aluminum plate as a bead with a height of 1 mm and a bead diameter width of 2 mm using an automatic coating machine, and was irradiated with ultraviolet

rays at an integrated light intensity of 40 kJ/$m^2$ to be cured, which provided a test piece. Then, the test piece was placed in an oven at 95°C while compressed using a jig and spacer specified in JIS-K-6262 (2013) so that the bead was 50% compressed (50% of the bead height was compressed). After 100 hours had elapsed, the test piece was removed from the oven, a thickness thereof was each measured, and a compression set was determined using the following formula. The results were evaluated based on the following criteria. The results are shown in Table 1. In the present invention, from the viewpoint of excellent reliability when the photocurable resin composition is used as a fuel cell sealing agent, for a compression set, 20% or less is passed, 15% or less is preferable, 100 or less is more preferable, 5% or less is particularly preferable, and 2.5% or less is most preferable. On the other hand, the lower limit is not particularly limited, but is substantially 0% or more, and may be 1% or more. The term "uncured" in Table 1 means that the photocurable resin composition was not cured even after ultraviolet irradiation, and a cured product could not be obtained. In addition, "crushed" means that when the compression set was set to 50% compression, the material was crushed and could not cope with high compression.

Compression set [%]

= [(Thickness of test piece before test - Thickness of test piece after durability test) / (Thickness of test piece before test - Thickness of spacer)] × 100

[Table 1]

| | Example 1 | Example 2 | Example 3 | Example 4 | Example 5 | Comparative Example 1-1 | Comparative Example 1-2 | Comparative Example 2-1 | Comparative Example 2-2 | Comparative Example 3 | Comparative Example 4 | Comparative Example 5 |
|---|---|---|---|---|---|---|---|---|---|---|---|---|
| a1 | 100 | 100 | 100 | 100 | 100 | 63 | 100 | 63 | 100 | 100 | 100 | 100 |
| b1-1 (C10) | 17 | 20 | | 20 | 29 | 33 | 52 | | | | 20 | 17 |
| b1-2 (C10) | | | 20 | | | | | | | | | |
| b'1 (C10) | | | | | | | | | | 20 | | |
| b2-1 (C12: linear) | 42 | | | | 29 | | | | | | | 6 |
| b2-2 (C18: branched) | | | | | | 4 | 6 | 37 | 58 | | | |
| b2-3 (C9: branched) | | 42 | 42 | | | | | | | | | |
| b2-4 (C8: linear) | | | | 42 | | | | | | | 70 | |
| b'2 (C12: linear) | | | | | | | | | | 42 | | |
| c1 | 7 | | | | 7 | 4 | 7 | 4 | 7 | 7 | | 7 |
| c2 | | 3 | 3 | 3 | | | | | | | 3 | |
| d1 | | 2 | 2 | 9 | | | | | | | 2 | |
| parts by mass of b2 / parts by mass of b1 | 2.5 | 2.1 | 2.1 | 2.1 | 1.0 | 0.1 | 0.1 | - | - | - | 3.5 | 0.4 |
| (1) Low compression sealing properties [kPa] | 400 or more | 400 or more | 400 or more | 400 or more | 300 | 400 or more | 400 or more | 170 | 170 | Uncured | 180 | 400 or more |
| (2) Compression set properties [%] | 2.7 | 0.6 | 0.6 | 10 | 4 | 28 | 28 | 3 | 3 | Uncured | 9 | Crushed |

From Examples 1 to 5 in Table 1, it can be found that the photocurable resin composition of the present invention can provide a photocurable resin composition that forms a cured product with low compression set and excellent sealing properties at low compression. In addition, it was confirmed that the photocurable resin compositions of Examples 1 to 5 did not collapse even under high compression of 50% in a compression set property test.

In addition, Comparative Example 1-1 and Comparative Example 1-2 in Table 1 were compositions in which the mass ratio (b2/b1) of the component (b1) and the component (b2) was outside the predetermined range of the present invention, and the obtained cured product had poor compression set. In addition, Comparative Example 2-1 and Comparative Example 2-2 were compositions that did not contain the component (b1) of the component (B) of the present invention, and the low compression sealing properties were poor. In addition, Comparative Example 3 was a composition with a combination of a methacrylate monomer having an alicyclic hydrocarbon group that was not the component (b1) of the component (B) of the present invention and a methacrylate monomer having a linear alkyl group that was not the component (b2) of the component (B) of the present invention, and even after irradiation with ultraviolet rays, its product was uncured and a cured product could not be obtained. In addition, Comparative Example 4 was a composition that was outside the predetermined content of the component (b2) of the present invention, and the low compression sealing properties were poor. In addition, Comparative Example 5 was a composition that was outside of the predetermined content of the component (b2) of the present invention, and its cured product was crushed at 50% compression of the compression set, failing to cope with high compression.

Further, the photocurable resin compositions of the above Examples and Comparative Examples were tested for (3) hardness, (4) tensile strength, and (5) elongation rate of the cured product.

(3) Measurement of hardness

The photocurable resin compositions of the above Examples and Comparative Examples were each poured into a frame of 200 mm × 200 mm × 1.0 mm (a thickness of the photocurable resin composition was set to 1 mm) . Thereafter, curing was performed by irradiating ultraviolet rays with an integrated light amount of 40 $kJ/m^2$ to produce a sheet-like cured product. A pressing surface of the A type durometer (hardness tester) was maintained to be parallel to the test piece (whose thickness was set to 6 mm by stacking 6 sheets of each cured product), and pressed at a force of 10N, whereby the pressing surface and the test piece were brought into close contact. A maximum value was read in the measurement, and the maximum value was defined as "hardness". The results are shown in Table 2. Details follow JIS K 6253 (2012). A hardness of 3 to 65 is passed, more preferably 5 to 50, particularly preferably 15 to 40, and most preferably more than 15 and 40 or less. The "uncured" in Table 2 means that curing failed even after ultraviolet irradiation and a cured product could not be obtained, and "-" means that measurement was not performed.

(4) Measurement of tensile strength

In the same manner as in the (3) measurement of hardness, a thickness of the photocurable resin compositions of Examples and Comparative Examples was set to 1 mm, and curing was performed by irradiating ultraviolet rays with an integrated light amount of 40 $kJ/m^2$ to produce sheet-like cured products. A test piece was produced by punching out with a No. 3 dumbbell. Both ends of the test piece were fixed to a chuck so that the long axis of the test piece was aligned with the center of the chuck. The test piece was pulled at a pulling speed of 500 mm/min, and the maximum load was measured. "Tensile strength (MPa)" was calculated from the maximum load. The results are shown in Table 2. Details follow JIS K 6251 (2010). In the present invention, from the viewpoint of high strength, a tensile strength of 0.6 MPa or more is passed, more preferably 0.7 MPa or more (upper limit: 100 MPa). The "uncured" in Table 2 means that curing failed even after ultraviolet irradiation and a cured product could not be obtained, and "-" means that measurement was not performed.

(5) Measurement of elongation rate of cured product

In the same manner as in the (3) measurement of hardness, a thickness of the photocurable resin compositions of Examples and Comparative Examples was set to 1 mm, and curing was performed by irradiating ultraviolet rays with an integrated light amount of 40 $kJ/m^2$ to produce sheet-like cured products. A test piece was produced by punching out with a No. 3 dumbbell, and marked lines were written at 20 mm intervals on the test piece.

The test piece was fixed to a chuck in the same manner as in the (4) measurement of tensile strength, and pulled at a pulling speed of 500 mm/min until the test piece was cut. During measurement, the test piece stretched and the distance between the marked lines widened, and thus a distance between the marked lines was measured with a caliper until the test piece was cut. An elongation proportion based on the initial marked line spacing was calculated as an "elongation rate (%)". The results are shown in Table 2. From the viewpoint of high extensibility, an elongation rate of 240% or more is passed, more preferably 300% or more (upper limit: 3000%). The "uncured" in Table 2 means that

curing failed even after ultraviolet irradiation and a cured product could not be obtained, and "-" means that measurement was not performed.

[Table 2]

| | Example 1 | Example 2 | Example 3 | Example 4 | Example 5 | Comparative Example 1-1 | Comparative Example 1-2 | Comparative Example 2-1 | Comparative Example 2-2 | Comparative Example 3 | Comparative Example 4 | Comparative Example 5 |
|---|---|---|---|---|---|---|---|---|---|---|---|---|
| (3) Hardness (A-type durometer) | 22 | 19 | 19 | 24 | 18 | 42 | 42 | 16 | 16 | Uncured | 12 | - |
| (4) Tensile strength [MPa] | 1.7 | 0.7 | 1.0 | 1.3 | 0.9 | 9.4 | 9.4 | 0.5 | 0.5 | Uncured | 0.8 | - |
| (5) Elongation rate [%] | 380 | 355 | 380 | 415 | 360 | 515 | 515 | 210 | 210 | Uncured | 240 | - |

It can be found from Examples 1 to 5 in Table 2 that the photocurable resin composition according to the present invention can provide a cured product with high elongation and high strength. That is, it can be found that the present invention can provide a photocurable resin composition with excellent cured product properties.

In addition, Comparative Example 1-1 and Comparative Example 1-2 in Table 2 were compositions in which the mass ratio (b2/b1) of the component (b1) and the component (b2) was outside the predetermined range of the present invention, but allowing to provide a cured product with high elongation and high strength, and resulting in excellent properties of the cured product. In addition, Comparative Example 2-1 and Comparative Example 2-2 were compositions that did not contain the component (b1) of component (B) of the present invention, providing a cured product with low elongation and low strength, and resulting in poor properties of the cured product. In addition, Comparative Example 3 was a composition in combination of a methacrylate monomer having an alicyclic hydrocarbon group that was not the component (b1) of the component (B) of the present invention and a methacrylate monomer having a linear alkyl group that was not the component (b2) of the component (B) of the present invention, its product was uncured even after irradiation with ultraviolet rays, and a cured product could not be obtained. In addition, Comparative Example 4 was a composition that was outside the predetermined content of the component (b2) of the present invention, providing a cured product with low elongation and low strength, and resulting in poor properties of the cured product.

Further, tests were performed on (6) moisture permeability (water vapor barrier properties) and (7) hydrogen gas barrier properties.

(6) Moisture permeability (water vapor barrier properties) test

The photocurable resin compositions of Example 2 and Example 3 were each poured into a frame of 200 mm $\times$ 200 mm $\times$ 1.0 mm. Then, irradiating was performed with ultraviolet rays for 20 seconds using an ultraviolet irradiator at an integrated light amount of 40 kJ/m$^2$, to produce a sheet-like cured product with a thickness of 1.0 mm. 5 g of calcium chloride (anhydrous) was placed in an aluminum cup having an opening with a diameter of 30 mm, and the cured product was set in the cup so as to cover the opening. A "initial total weight" (g) was measured, standing for 24 hours was performed in a constant temperature and humidity chamber maintained at an ambient temperature of 40°C and a relative humidity of 95% RH, and a "total weight after standing" (g) was measured to calculate moisture permeability (g/m$^2$·24h), and evaluation was performed based on the following evaluation criteria. As a result, both Example 2 and Example 3 were passed. The detailed test method was accordance with JIS Z 0208 (1976). When using the photocurable resin composition as a curable sealing agent for fuel cells, the moisture permeability is preferably less than 10 g/m$^2$·24h ("pass" according to the evaluation criteria below).

[Evaluation criteria]

Pass: moisture permeability of less than 10 g/m$^2$·24h

Fail: moisture permeability of 10 g/m$^2$·24h or more

(7) Hydrogen gas barrier property test

In the same manner as the (6) moisture permeability (water vapor barrier property) test, the photocurable resin compositions of Example 2 and Example 3 were irradiated with ultraviolet rays for 20 seconds using an ultraviolet irradiator at an integrated light amount of 40 kJ/m$^2$, to produce a sheet-like cured product with a thickness of 1.0 mm. Then, using the obtained sheet-like cured product, hydrogen gas barrier properties were measured in accordance with JIS K7126-1:2006 (Plastic film and sheeting - Determination of gas-transmission rate - Part 1: Differential-pressure method). A type of the test was a pressure sensor method, and the measurement was performed under the conditions of 23°C, using a test gas (hydrogen gas) on a high pressure side at 100 kPa. Evaluation was performed based on the following evaluation criteria. As a result, both Example 2 and Example 3 were passed. When using the photocurable resin composition as a sealing agent for fuel cells, the hydrogen gas barrier property is preferably less than $1 \times 10^{-14}$ mol·m/m$^2$·s·Pa ("pass" according to the evaluation criteria below).

[Evaluation criteria]

Pass: less than $1 \times 10^{-14}$ mol·m/m$^2$·s·Pa

Fail: 1 × $10^{-14}$ mol·m/$m^2$·s·Pa or more

It can be found from the results of Example 2 and Example 3 that the photocurable resin composition of the present invention provides a cured product having low moisture permeability, excellent hydrogen gas barrier properties, and good sealing properties.

Industrial Applicability

The photocurable resin composition according to the present invention can form a cured product with has less compression set and excellent sealing properties at low compression, and thus can be suitably used for various sealing applications. Particularly, the photocurable resin composition according to the present invention is industrially advantageous because of being effective as a curable sealing agent for fuel cells.

The present application is based on Japanese Patent Application No. 2021-187514 filed on November 18, 2021, the disclosure content of which is incorporated by reference in its entirety.

Reference Signs List

| | |
|---|---|
| 1 | Cell of polymer electrolyte fuel cell |
| 2 | Separator |
| 3a | Air electrode (cathode) |
| 3b | Fuel electrode (anode) |
| 4 | Polymer electrolyte membrane |
| 5 | Membrane electrode assembly (MEA) |
| 6 | Frame |
| 7 | Sealing portion |
| 8a | Oxidizing gas flow path |
| 8b | Fuel gas flow path |
| 9 | Cooling water flow path |
| 10 | Cell stack |
| 11 | Polymer electrolyte fuel cell |

## Claims

**1.** A photocurable resin composition comprising:

components (A) to (C) below, wherein a mass ratio (b2/b1) of a component (b1) below and a component (b2) below is from 1.0 to 5.0, and the component (b2) is contained in an amount of 10 to 65 parts by mass relative to 100 parts by mass of the component (A),
component (A): a polyisobutylene resin containing one or more (meth)acryloyl groups and a $-[CH_2C(CH_3)_2]-$ unit,
component (B): (b1) an acrylate monomer having an alicyclic hydrocarbon group having 5 to 25 carbon atoms and (b2) an acrylate monomer having a linear or branched alkyl group having 5 to 30 carbon atoms, and
component (C): a photoradical polymerization initiator.

**2.** The photocurable resin composition according to claim 1, comprising15 to 130 parts by mass of the component (B) relative to 100 parts by mass of the component (A).

**3.** The photocurable resin composition according to claim 1, wherein

the component (b1) comprises at least one selected from the group consisting of cyclohexyl acrylate, trimethylcyclohexyl acrylate, 4-t-butylcyclohexyl acrylate, dicyclopentanyl acrylate, dicyclopentenyl acrylate, dicyclopentenyloxyethyl acrylate, isobornyl acrylate, and adamantyl acrylate, and
the component (b2) comprises at least one selected from the group consisting of isononyl acrylate, isostearyl acrylate, tridecyl acrylate, lauryl acrylate, tetradecyl acrylate, tetraoctyl acrylate, pentadecyl acrylate, hexadecyl acrylate, heptadecyl acrylate, and n-octyl acrylate.

**4.** The photocurable resin composition according to claim 1, further comprising hydrophobic silica as a component (D) .

**5.** The photocurable resin composition according to claim 1, wherein a cured product has a compression set after 100 hours at a 50% compression of 20% or less.

**6.** A sealing agent comprising the photocurable resin composition set forth in claim 1.

**7.** A cured product obtained by irradiating the photocurable resin composition set forth in any one of claims 1 to 5 or the sealing agent set forth in claim 6 with light.

**8.** A fuel cell comprising any one of the group consisting of a seal portion between adjacent separators in a fuel cell, a seal portion between a frame and an electrolyte membrane in a fuel cell, and a seal portion between a frame and a membrane electrode assembly in a fuel cell,
wherein any of the seal portions is the cured product set forth in claim 7.

**9.** A method for sealing at least a portion between at least two flanges of a part to be sealed having at least two flanges, the method comprising:

a step of applying the photocurable resin composition set forth in any one of claims 1 to 5 to at least one of the flanges;
a step of irradiating the applied photocurable resin composition with active energy rays to cure the photocurable resin composition and to form a gasket made of a cured product of the photocurable resin composition; and
a step of disposing another flange on the gasket and press-bonding the one flange applied with the photocurable resin composition and the another flange together via the gasket to seal at least a portion between the at least two flanges.

**10.** A method for sealing at least a portion between at least two flanges of a part to be sealed having at least two flanges, the method comprising:

a step of disposing a mold for forming a gasket on at least one of the flanges;
a step of injecting the photocurable resin composition set forth in any one of claims 1 to 5 in at least a part of a gap between the mold for forming the gasket and the flange with the mold disposed; and
a step of irradiating the photocurable resin composition with active energy rays to cure the photocurable resin composition and to form a gasket made of a cured product of the photocurable resin composition;
a step of removing the mold from the one flange; and
a step of disposing another flange on the gasket and press-bonding the one flange and the another flange via the gasket to seal at least a portion between the at least two flanges.

Figure 1

FIG.1

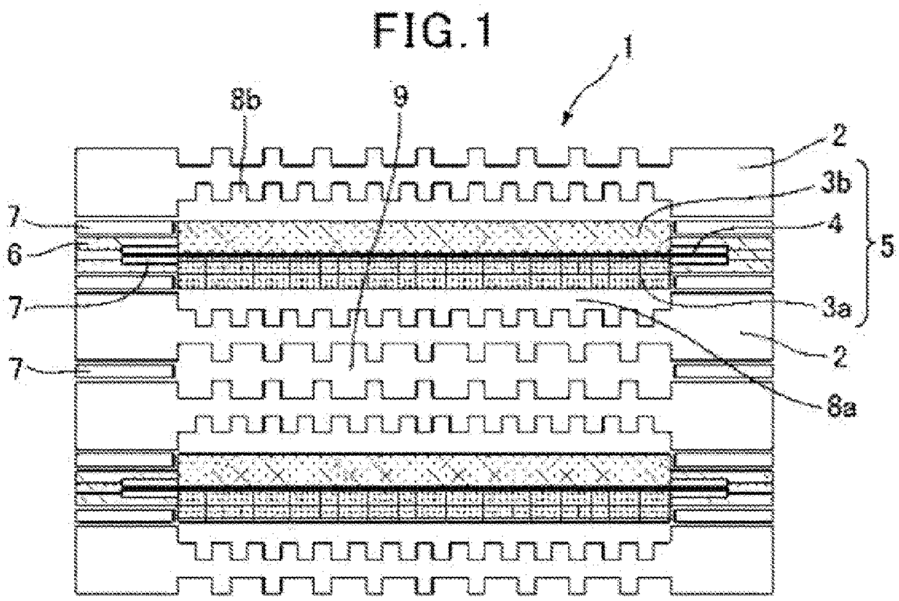


Figure 2

FIG.2

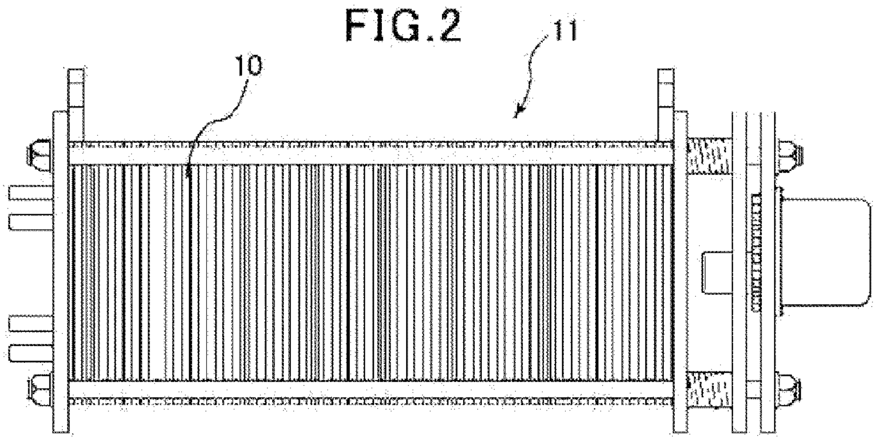

**INTERNATIONAL SEARCH REPORT**

International application No. **PCT/JP2022/039838**

**A. CLASSIFICATION OF SUBJECT MATTER**

***C08F 290/04***(2006.01)i; ***C08F 2/44***(2006.01)i; ***C08F 20/00***(2006.01)i; ***C08F 20/10***(2006.01)i; ***C08K 3/36***(2006.01)i; ***C09K 3/10***(2006.01)i; ***H01M 8/0284***(2016.01)i; ***H01M 8/10***(2016.01)i
FI: C08F290/04; C08F2/44 A; C08F20/00 510; C08F20/10; C08K3/36; C09K3/10 Z; H01M8/0284; H01M8/10 101

According to International Patent Classification (IPC) or to both national classification and IPC

**B. FIELDS SEARCHED**

Minimum documentation searched (classification system followed by classification symbols)

C08F290/04; C08F2/44; C08F20/00; C08F20/10; C08K3/36; C09K3/10; H01M8/0284; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-102243 A (KANEKA CORP.) 31 May 2012 (2012-05-31)<br>claims, paragraphs [0006], [0053]-[0059], [0075], [0085], examples | 1-7<br>9-10 |
| X<br>Y | WO 2020/080309 A1 (THREEBOND CO., LTD.) 23 April 2020 (2020-04-23)<br>claims, paragraphs [0017], [0024]-[0025], [0028], [0030]-[0031], [0044]-[0062] | 1-3, 5-7<br>9-10 |
| X<br>Y | JP 2014-517857 A (HENKEL US IP LLC) 24 July 2014 (2014-07-24)<br>claims, paragraphs [0024]-[0028], [0033], [0042], [0047]-[0051], [0058]-[0059], [0061]-[0110] | 1-7, 9-10<br>9-10 |
| X<br>Y | JP 2021-21012 A (AICA KOGYO CO., LTD.) 18 February 2021 (2021-02-18)<br>claims, paragraphs [0003]-[0004], [0006], [0014]-[0015], [0017]-[0020], [0022], [0025], [0032], [0035]-[0049] | 1-7, 9<br>8, 10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2022** | **27 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/039838**

**C. DOCUMENTS CONSIDERED TO BE RELEVANT**

| Category* | Citation of document, with indication, where appropriate, of the relevant passages | Relevant to claim No. |
|---|---|---|
| X | JP 2013-216782 A (KANEKA CORP.) 24 October 2013 (2013-10-24) claims, paragraphs [0017], [0053]-[0054], [0097]-[0098], [0113]-[0116], [0120], [0123]-[0124], [0137], [0166], examples | 1-7 |
| Y | | 8-10 |
| Y | WO 2019/124252 A1 (THREEBOND CO., LTD.) 27 June 2019 (2019-06-27) claims, paragraphs [0005], [0058], [0067]-[0068], [0070]-[0071] | 8-10 |
| A | WO 2014/119340 A1 (BRIDGESTONE CORP.) 07 August 2014 (2014-08-07) entire text | 1-10 |
| A | JP 2021-134327 A (AICA KOGYO CO., LTD.) 13 September 2021 (2021-09-13) entire text | 1-10 |
| A | JP 2021-15902 A (SEKISUI CHEM. CO., LTD.) 12 February 2021 (2021-02-12) entire text | 1-10 |

Form PCT/ISA/210 (second sheet) (January 2015)

**INTERNATIONAL SEARCH REPORT**
**Information on patent family members**

International application No.
**PCT/JP2022/039838**

| Patent document cited in search report | Publication date (day/month/year) | Patent family member(s) | Publication date (day/month/year) |
|---|---|---|---|
| JP 2012-102243 A | 31 May 2012 | (Family: none) | |
| WO 2020/080309 A1 | 23 April 2020 | US 2021/0347930 A1<br>claims, paragraphs [0019], [0025]-[0026], [0029], [0031]-[0032], [0045]-[0084]<br>CN 112789305 A | |
| JP 2014-517857 A | 24 July 2014 | WO 2012/149091 A2<br>claims, paragraphs [0028]-[0031], [0036], [0045], [0050]-[0053], [0060]-[0061], [0063]-[0071]<br>US 2013/0287980 A1<br>EP 2702112 A2<br>CN 103492504 A | |
| JP 2021-21012 A | 18 February 2021 | (Family: none) | |
| JP 2013-216782 A | 24 October 2013 | (Family: none) | |
| WO 2019/124252 A1 | 27 June 2019 | US 2020/0350602 A1<br>claims, paragraphs [0005], [0087], [0096]-[0097], [0099]-[0100]<br>EP 3730525 A1<br>CN 111491965 A | |
| WO 2014/119340 A1 | 07 August 2014 | US 2015/0368388 A1<br>entire text<br>EP 2952526 A1<br>CN 104968690 A | |
| JP 2021-134327 A | 13 September 2021 | US 2021/0269632 A1<br>entire text | |
| JP 2021-15902 A | 12 February 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004111146 A
- JP 2004075824 A
- US 20050043480
- JP 2007100099 A
- US 20060052546
- JP 2013229323 A
- US 20140287340
- JP H0288614 A
- EP 000353471 A
- JP 2013216782 A
- JP 2021187514 A


### Non-patent literature cited in the description


- *Polymer Bulletin,* 1981, 135-141
- **T. P. LIAO ; J. P. KENNEDY.** *Polymer Bulletin,* 1988, vol. 20, 253-260